(19) Europäisches Patentamt
European Patent Office
Office européen des brevets

(11) **EP 4 345 691 A1**

(12) **EUROPEAN PATENT APPLICATION**

(43) Date of publication:
**03.04.2024 Bulletin 2024/14**

(21) Application number: **23200841.7**

(22) Date of filing: **29.09.2023**

(51) International Patent Classification (IPC):
**G06N 3/0464** (2023.01)   **G06N 3/063** (2023.01)
**G06N 3/0495** (2023.01)

(52) Cooperative Patent Classification (CPC):
**G06N 3/0464; G06N 3/0495; G06N 3/063**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 GB 202214426**

(71) Applicant: **Imagination Technologies Limited Kings Langley, Hertfordshire WD4 8LZ (GB)**

(72) Inventors:
• **Gale, Timothy**
  **Kings Langley, WD4 8LZ (GB)**
• **Hough, David**
  **Kings Langley, WD4 8LZ (GB)**

(74) Representative: **Slingsby Partners LLP**
**1 Kingsway**
**London WC2B 6AN (GB)**

(54) **METHODS AND SYSTEMS FOR PERFORMING CHANNEL EQUALISATION ON A CONVOLUTION LAYER IN A NEURAL NETWORK**

(57)     Methods and systems for processing data in accordance with a neural network that includes a sequence of layers comprising a first convolution layer, a second convolution layer, and none, one or more than one middle layer between the first and second convolution layers. The method includes: scaling, using hardware logic, a tensor in the neural network, after the first convolution layer and before the second convolution layer, on a per channel basis by a set of per channel activation scaling factors; and implementing, using the hardware logic, the second convolution layer with weights that have been scaled on a per input channel basis by the inverses of the set of per channel activation scaling factors.

FIG. 5

EP 4 345 691 A1

**Description**

TECHNICAL FIELD

This application is directed to methods and systems for performing channel equalisation on a convolution layer in a neural network.

BACKGROUND

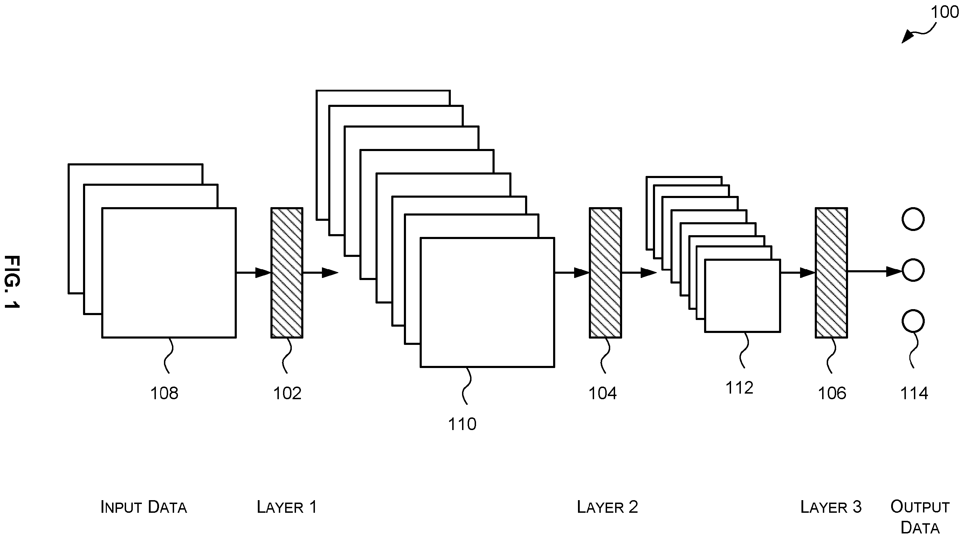

A Deep Neural Network (DNN) is a form of artificial neural network comprising a plurality of interconnected layers that can be used for machine learning applications. In particular, a DNN can be used in signal processing applications, including, but not limited to, image processing and computer vision applications. FIG. 1 illustrates an example DNN 100 that comprises a plurality of layers 102, 104, 106. Each layer 102, 104, 106 receives input data, and processes the input data in accordance with the layer to produce output data. The output data is either provided to another layer as the input data or is output as the final output data of the DNN. For example, in the DNN 100 of FIG. 1, the first layer 102 receives the original input data 108 to the DNN 100 and processes the input data in accordance with the first layer 102 to produce output data 110. The output data 110 of the first layer 102 becomes the input data to the second layer 104, and the second layer 104 processes the input data 110 in accordance with the second layer 104 to produce output data 112. The output data 112 of the second layer 104 becomes the input data to the third layer 106, and the third layer 106 processes the input data 112 in accordance with the third layer 106 to produce output data 114. The output data 114 of the third layer 106 is then output as the final output data of the DNN. Where the DNN is used for classification, the final output data may be a vector of length A, wherein A is the number of classes and each value in the vector represents the probability of a certain class.

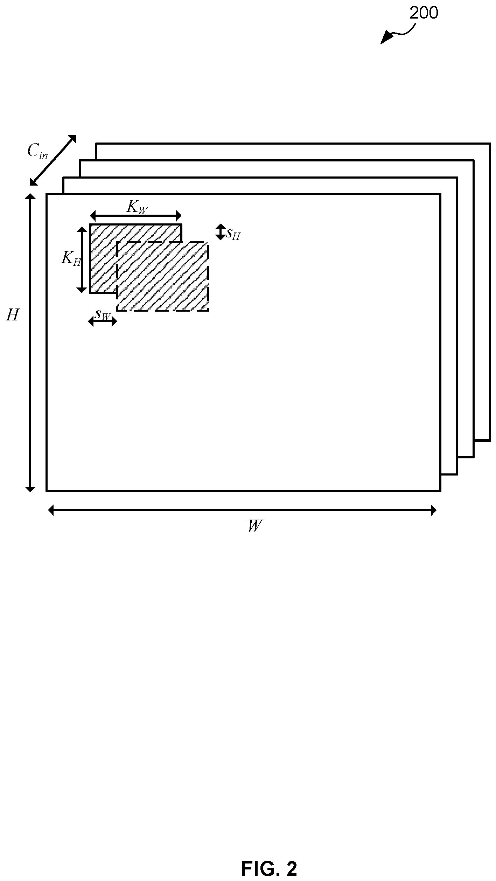

The data 200 input to and output from a layer of a DNN can be described as a tensor. As is known to those of skill in the art, a tensor is a generalization of vectors and matrices and can be considered as an n-dimensional array. A vector is a one-dimensional tensor, and a matrix is a two-dimensional tensor. The tensors in a DNN are often, but are not necessarily, four-dimensional. Reference is made to FIG. 2 which illustrates an example four-dimensional (4D) tensor 200 in which one dimension (e.g. corresponding to the batch size) has been suppressed for visualisation purposes. The 4D tensor 200 may be described as comprising one or more 3D tensors, wherein each 3D tensor comprises $C_{in}$ planes of data, where each plane has a dimension $W \times H$. Each plane may be referred to as a channel of the tensor. The number of 3D tensors may be referred to as the batch size. Each 3D tensor may be, for example, an image. An element of a tensor may be referred to as a tensel, akin to how an element of a picture is referred to as a pixel.

The processing that is performed on the input data to a layer depends on the type of layer. For example, each layer of a DNN may be one of a plurality of different types. Example DNN layer types include, but are not limited to, a convolution layer, an activation layer, a normalisation layer, a pooling layer, and a fully connected layer. It will be evident to a person of skill in the art that these are example DNN layer types and that this is not an exhaustive list and there may be other DNN layer types.

A convolution layer convolves the input data with weights associated with the layer. Specifically, each convolution layer is associated with a plurality of weights $k_1 ... k_g$, which may also be referred to as filter weights or coefficients. The weights are grouped to form one or more filters or kernels, and each filter may be associated with an offset bias *bias*. Each filter may have a dimension $K_W \times K_H \times C_{in}$ (i.e., each filter may comprise a set of $K_W \times K_H \times C_{in}$ weights $k$) and may be applied to the input data according to a convolution operation across steps $s_W$ and $s_H$ in the $W$ and $H$ directions as shown in FIG. 2. The step sizes $s_W$ and $s_H$ may be referred to as the strides of the convolution. The number and dimensions of filters and/or the number of weights per filter may vary between convolution layers. A convolutional neural network (CNN), which is a specific type of DNN that is effective for image recognition and classification, generally comprises a plurality of convolution layers.

An activation layer, which often, but not necessarily, follows a convolution layer, applies one or more activation functions to the input data to the layer. An activation function receives an input tensor and performs a certain non-linear mathematical operation on each value or element in the input tensor. In other words, the activation function operates on each value or element in the input tensor separately. In some examples, an activation layer may act as rectified linear unit (ReLU) by implementing an ReLU function or a leaky rectified linear unit (LReLU) by implementing a LReLU function.

A normalisation layer is configured to perform a normalising function, such as a Local Response Normalisation (LRN) function on the input data. A pooling layer performs a pooling function, such as a max, min or average function, to summarise subsets of the input data. The purpose of a pooling layer is thus to reduce the spatial size of the representation to reduce the number of parameters and computation in the network, and hence to also control overfitting.

A fully connected layer, which often, but not necessarily, follows a plurality of convolution and pooling layers, takes a two-dimensional tensor (e.g. a tensor with a batch size and a channel dimension) of input data values and outputs a two-dimensional tensor (e.g. a tensor with a batch size dimension and a channel dimension). Where the DNN is used for classification, the output may have A channels where A is the number of classes, and each value in the tensor may represent the probability of a certain class. The output tensor is generated through a matrix multiplication of a set of weights, optionally followed by a bias offset. A fully connected layer thus receives a set of weights and may receive a bias.

Accordingly, each layer of a DNN receives input data values (e.g., an input tensor) and generates output data values (e.g., an output tensor); and some layers (such as, but not limited to, convolution layers and fully connected layers) also receive weights and/or biases. The input data values, output data values, weights and biases of the layers of a DNN may collectively be referred to as the network parameters of the DNN.

To implement a neural network the parameters of the neural network are represented in a number format. Two common types of number formats are fixed point number formats and floating point number formats. As is known to those skilled in the art, a fixed point number format has a fixed number of digits after the radix point (e.g., decimal point or binary point). In contrast, a floating point number format does not have a fixed radix point (i.e., it can "float"). In other words, the radix point can be placed in multiple places within the number. There are also other formats that are similar to fixed point number formats but where the exponent is a fixed real number (stored in floating point format) rather than an integer. For these formats $2^{exponent}$ is commonly referred to as the "scale". Such formats may also possess a "zero point" which acts as an offset to the stored values to allow for asymmetric number ranges. The stored value $x_{int}$ corresponds to the value $x = scale * (x_{int} - zero\ point)$. While representing the network parameters of a DNN in a floating point number format may allow more accurate or precise output data to be produced, processing network parameters in a floating point number format is complex which tends to increase the silicon area, power consumption, memory and bandwidth consumption, and complexity of the hardware to implement the neural network. Accordingly, at least some of the network parameters may be represented in another format, such as a fixed point number format, to reduce the hardware area, power consumption, memory and bandwidth consumption and complexity of the hardware to implement the neural network.

Generally, the fewer the bits that are used to represent the network parameters of a DNN (e.g., input data values, weights, biases, and output data values), the more efficiently the DNN can be implemented. However, typically the fewer the bits that are used to represent the network parameters of a DNN (e.g., input data values, weights, biases, and output data values) the less accurate the DNN becomes. Accordingly, it is desirable to implement a DNN using a reduced number of bits without compromising the accuracy of the DNN.

The embodiments described below are provided by way of example only and are not limiting of implementations which solve any or all of the disadvantages of methods and systems for implementing a DNN.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Described herein are methods and systems for processing data in accordance with a neural network that includes a sequence of layers comprising a first convolution layer, a second convolution layer and none, one, or more than one middle layer between the first and second convolution layers. The method includes: scaling, using hardware logic, a tensor in the neural network, after the first convolution layer and before the second convolution layer, on a per channel basis by a set of per channel activation scaling factors; and implementing, using the hardware logic, the second convolution layer with weights that have been scaled on a per input channel basis by the inverses of the set of per channel activation scaling factors.

A first aspect provides a method of processing data in accordance with a neural network, the neural network comprising a sequence of layers comprising a first convolution layer, a second convolution layer, and none, one or more than one middle layer between the first and second convolution layers, the method comprising: scaling, using hardware logic, a tensor in the neural network, after the first convolution layer and before the second convolution layer, on a per channel basis by a set of per channel activation scaling factors; and implementing, using the hardware logic, the second convolution layer with weights that have been scaled on a per input channel basis by the inverses of the set of per channel activation scaling factors.

The neural network may comprise a second sequence of layers comprising a third convolution layer, a fourth convolution layer, and none, one or more than one middle layer between the third and fourth convolution layers, and the method further comprises: scaling a tensor in the neural network, after the third convolution layer and before the fourth convolution layer, on a per channel basis by a second set of per channel activation scaling factors; and implementing the fourth convolution layer with weights that have been scaled on a per input channel basis by the inverses of the second set of per channel activation scaling factors.

The second and third convolution layers may be the same convolution layer.

The tensor that is scaled on a per channel basis by the set of per channel activation scaling factors may be an output tensor of the first convolution layer.

The sequence may comprise a middle layer and an output tensor of the middle layer may feed a first branch comprising the second convolution layer and a second branch, and the method may further comprise scaling, using the hardware logic, a tensor in the second branch on a per channel basis by the inverses of the set of per channel activation scaling factors.

An output tensor of the first convolution layer may feed a first branch comprising the second convolution layer and a second branch, and the method may further comprise scaling, using the hardware logic, a tensor in the second branch on a per channel basis by the inverses of the set of per channel activation scaling factors.

The sequence may comprise a middle layer and the tensor that is scaled on a per channel basis by the set of per channel activation scaling factors may be an output tensor of the middle layer.

The first convolution layer may form part of a first branch and an output tensor of the first branch is combined with a tensor of a second branch to generate an input tensor to the second convolution layer, and the method may further comprise scaling the tensor of the second branch on a per channel basis by the set of per channel activation scaling factors.

The first convolution layer may form part of a first branch and an output tensor of the first branch is combined with a tensor of a second branch to generate an input tensor to the second convolution layer, and the tensor that is scaled on a per channel basis by the set of per channel activation scaling factors is the input tensor to the second convolution layer. The combination and the scaling by the set of per channel activation scaling factors may be performed by a single hardware unit of the hardware logic.

The sequence may comprise a middle layer that is non-scale invariant.

The method may further comprise: implementing the first convolution layer with weights that have been scaled on a per output channel basis by a set of per channel weight scaling factors; and scaling an output tensor of the first convolution layer on a per channel basis by the inverses of the set of per channel weight scaling factors.

The set of per channel activation scaling factors and the inverses of the set of per channel weight scaling factors may be applied to the output tensor of the first convolution layer by a same operation.

The set of per channel activation scaling factors may be applied to the tensor by a first operation, and the inverses of the set of per channel weight scaling factors may be applied to the output tensor of the first convolution layer by a second, different, operation.

The method may further comprise, identifying, by a processor, the set of per channel weight scaling factors.

The method may further comprise, identifying, by a processor, the sequence of layers in the neural network.

The method may further comprise, selecting, by a processor, the set of per channel activation scaling factors.

The sequence may comprise a middle layer that is scale invariant.

The sequence may comprise a middle layer that is one of an activation layer implementing a ReLU function, an activation layer implementing a LReLU function, and a pooling layer.

The hardware logic may comprise a neural network accelerator.

The neural network accelerator may comprise a hardware unit configured to perform per channel multiplication and the scaling of the tensor by the set of per channel activation scaling factors is performed by the hardware unit.

The first convolution layer may form part of a first branch and an output tensor of the first branch may be combined with a tensor of a second branch to generate an input tensor to the second convolution layer, and the tensor that is scaled on a per channel basis by the set of per channel activation scaling factors may be the input tensor to the second convolution layer. The neural network accelerator may comprise a hardware unit configured to perform a per tensel operation between a first tensor and a second tensor and rescale an output of the per tensel operation, and the combination and the scaling by the set of per channel activation scaling factors may be performed by the hardware unit.

The first convolution layer may form part of a first branch and an output tensor of the first branch may be combined with a tensor of a second branch to generate an input tensor to the second convolution layer, and the method may further comprise scaling the tensor of the second branch on a per channel basis by the set of per channel activation scaling factors. The neural network accelerator may comprise a hardware unit configured to receive a first tensor and a second tensor, rescale the second tensor, and perform a per tensel operation between the first tensor and the rescaled second tensor, and the combination and the scaling of the tensor in the second branch by the set of per channel activation scaling factors may be performed by the hardware unit.

A second aspect provides a neural network accelerator configured to perform the method of the first aspect.

A third aspect provides a neural network accelerator configured to process data in accordance with a neural network, the neural network comprising a sequence of layers comprising a first convolution layer, a second convolution layer, and none, one or more than one middle layer between the first and second convolution layers, the neural network accelerator comprising hardware logic configured to scale a tensor in the neural network, after the first convolution layer and before the second convolution layer, on a per channel basis by a set of per channel activation scaling factors and implement the second convolution layer with weights that have been scaled on a per input channel basis by the inverses of the set of per channel activation scaling factors.

A fourth aspect provides computer readable storage medium having stored thereon computer readable code configured to cause a neural network accelerator to perform the method of the first aspect when the code is run.

A fifth aspect provides a method of processing data in accordance with a neural network using a neural network accelerator comprising a convolution processing unit which is configured to accelerate convolution operations and one or more hardware units configured to perform per channel multiplication, the neural network comprising a sequence of layers comprising a first convolution layer, a second convolution layer, and none, one or more than one middle layer between the first and second convolution layers, the method comprising: scaling, using one of the one or more hardware units configured to perform per channel multiplication, a tensor in the neural network, after the first convolution layer and before the second convolution layer, on a per channel basis by a set of per channel activation scaling factors; and implementing, using the convolution processing unit, the second convolution layer with weights that have been scaled on a per input channel basis by the inverses of the set of per channel activation scaling factors.

The method may further comprise: implementing, using the convolution processing unit, the first convolution layer with weights that have been scaled on a per output channel basis by a set of per channel weight scaling factors; and scaling, using one of the one more hardware units configured to perform per channel multiplication, an output tensor of the first convolution layer on a per channel basis by the inverses of the set of per channel weight scaling factors.

The neural network accelerators described herein may be embodied in hardware on an integrated circuit. There may be provided a method of manufacturing, at an integrated circuit manufacturing system, a neural network accelerator described herein. There may be provided an integrated circuit definition dataset that, when processed in an integrated circuit manufacturing system, configures the system to manufacture an integrated circuit that embodies a neural network accelerator described herein. There may be provided a non-transitory computer readable storage medium having stored thereon a computer readable description of a neural network accelerator that, when processed in an integrated circuit manufacturing system, causes the integrated circuit manufacturing system to manufacture an integrated circuit embodying the neural network accelerator.

There may be provided an integrated circuit manufacturing system comprising: a non-transitory computer readable storage medium having stored thereon a computer readable description of a neural network accelerator described herein; a layout processing system configured to process the computer readable description so as to generate a circuit layout description of an integrated circuit embodying the neural network accelerator; and an integrated circuit generation system configured to manufacture an integrated circuit embodying the neural network accelerator according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

FIG. 1 is a schematic diagram of an example deep neural network (DNN);

FIG. 2 is a schematic diagram illustrating performing an example convolution operation on an example tensor in a DNN;

FIG. 3 is a set of histograms illustrating the distribution for a plurality of channels of an example tensor for a layer of an example neural network;

FIG. 4 is a schematic diagram of an example method of implementing activation channel equalisation for a convolution layer that is part of a sequence of layers;

FIG. 5 is a schematic diagram of a second example method of implementing activation channel equalisation for a convolution layer that is part of a first example sequence of layers;

FIG. 6 is a schematic diagram of a third example method of implementing activation channel equalisation for a convolution layer that is part of a second example sequence of layers;

FIG. 7 is a schematic diagram illustrating a first example method of implementing activation channel equalisation and weight channel equalisation for a convolution layer that is part of a first example sequence of layers;

FIG. 8 is a schematic diagram illustrating a second example method of implementing activation channel equalisation and weight channel equalisation for a convolution layer that is part of a second example sequence of layers;

FIG. 9 is a schematic diagram illustrating an example sequence of layers wherein the second convolution layer forms part of a branch;

FIG. 10 is a schematic diagram illustrating the sequence of layers of FIG. 9 in an example neural network;

FIG. 11 is a schematic diagram illustrating an example method for implementing activation channel equalisation for the first convolution layer of the sequence of layers of FIG. 9;

FIG. 12 is a schematic diagram illustrating an example sequence of layers where the first convolution layer forms part of a branch;

FIG. 13 is a schematic diagram illustrating the sequence of layers of FIG. 12 in an example neural network;

FIG. 14 is a schematic diagram illustrating a first example method for implementing activation channel equalisation for the first convolution layer of the sequence of layers of FIG. 12;

FIG. 15 is a block diagram of an example implementation of an element-wise operations (EWO) processing unit;

FIG. 16 is a schematic diagram illustrating a second example method of implementing activation channel equalisation for the first convolution layer of the sequence of layers of FIG. 12;

FIG. 17 is a schematic diagram illustrating a third example method of implementing activation channel equalisation for the first convolution layer of the sequence of layers of FIG. 12;

FIG. 18 is a flow diagram of an example method of processing a neural network using activation channel equalisation;

FIG. 19 is a block diagram of an example neural network accelerator for implementing any of the methods described herein;

FIG. 20 is a block diagram of an example implementation of the convolution processing unit of FIG. 19;

FIG. 21 is a block diagram of an example implementation of a convolution engine of FIG. 20;

FIG. 22 is a chart of the mean squared error at the output of an example neural network with and without performing activation channel equalisation on convolution layer outputs as described herein;

FIG. 23 is a block diagram of an example computer system in which a neural network accelerator described herein may be implemented; and

FIG. 24 is a block diagram of an integrated circuit manufacturing system for generating an integrated circuit embodying a neural network accelerator described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, while representing the network parameters of a DNN in a floating point number format may allow more accurate or precise output data to be produced, processing network parameters in a floating point number format is complex which tends to increase the silicon area, power consumption, memory and bandwidth consumption, and complexity of the hardware to implement the neural network. Accordingly, at least some of the network parameters may be represented in another format, such as a fixed point number format, to reduce the area, power consumption, memory, bandwidth consumption and complexity of the hardware to implement the neural network. However, representing a set of network parameters in another format, such as a fixed point number format, often involves quantising that set of network parameters from a floating point number format to the desired number format. Since quantisation introduces quantisation error this can reduce the accuracy of the neural network.

One method known to the Applicant for addressing this issue, which is not an admission that the method is well known or known outside of the Applicant company, is to, instead of selecting a single number format for all network parameters of a neural network, select number formats for each type of network parameter on a per layer basis in accordance with one of one or more format selection algorithms. The different types of network parameters for a layer may include: (i) input data values; (ii) weights; (iii) biases; and/or (iv) output data values. Accordingly, a number format may be selected for the input data values for a first layer, another number format may be selected for the weights for the first layer, and yet another number format may be selected for the input data values for a second layer. Since all of the network parameters for a layer of a particular type may be referred to as a tensor for that layer, this may alternatively be referred to as selecting number formats on a tensor basis.

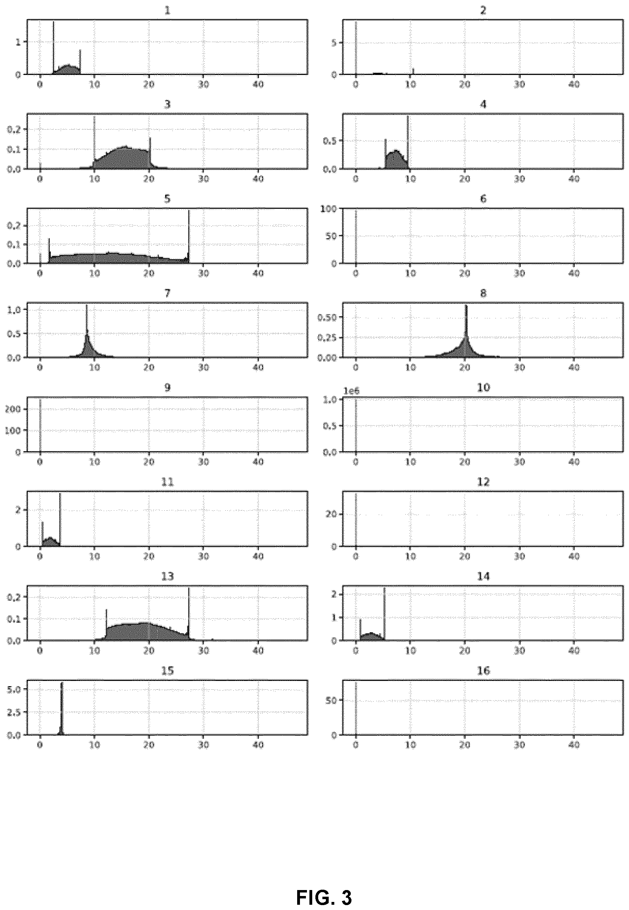

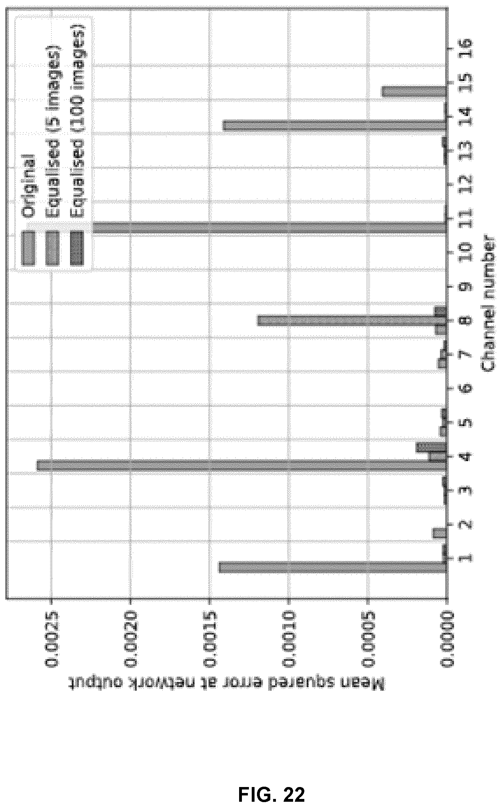

However, different channels within an activation tensor may have different ranges. For example, FIG. 3 shows histograms illustrating the distribution for sixteen channels (i.e. channels 1 to 16) for an example activation tensor for a layer of a MobileNet v3 neural network. It can be seen that there are significant differences in ranges between the channels. Accordingly, using a single number format for all channels of an activation tensor may clip some channels or quantise narrow channels more coarsely. For example, as shown in FIG. 22 by the "Original" bars, testing has shown that the channels of FIG. 3 that cause the greatest perturbation on the output of the network (which may be measured by the L2 norm against the floating point outputs, for example) (1, 4, 11 and 14, and to a much lesser extent 15) have smaller ranges than the tensor as a whole. The perturbation on the output of the network due to these channels may be reduced by selecting number formats for them that differ from those of other channels in the tensor. However, keeping track of, and implementing, a separate number format for each channel of an activation tensor is difficult to implement in hardware and, in some cases, may require the computations be carried out in floating point, defeating the purpose of the multiple formats.

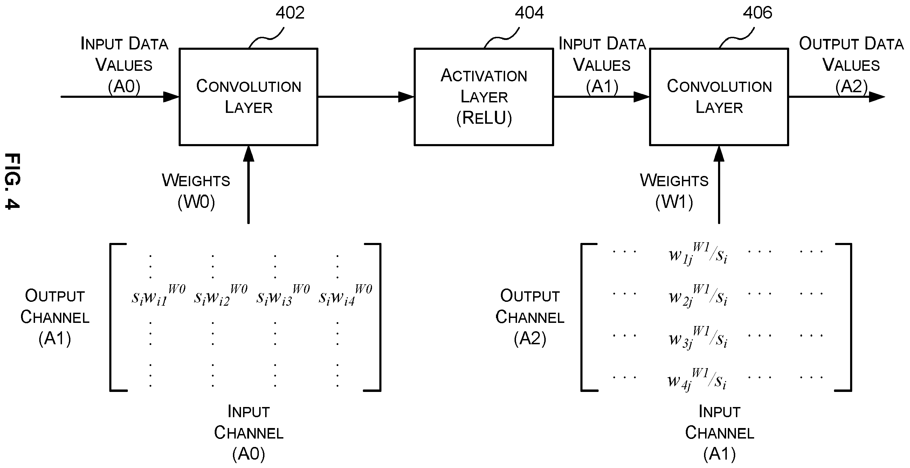

One method known to the Applicant to address the issue of having a single number format for all of the network parameters of an activation tensor for a layer where the network parameters of different channels have different ranges, which is not an admission that the method is well-known or known outside of the Applicant company, is to implement activation channel equalisation by scaling the weights of two successive convolution layers when they are separated by an activation layer that implements a ReLU function. The term channel equalisation is used herein to mean that the range of each channel coincides with the range of values that can be represented optimally by the tensor's number format. The activation channel equalisation method known to the Applicant is illustrated in FIG. 4. It is noted that in the FIGS. herein convolutions are shown as matrix multiplications for simplicity. It also noted that there may also be a bias per filter which is added to the output of each tensel in the corresponding output channel. However, the biases have been omitted from the FIGS. for simplicity.

In the known method, where a neural network comprises a sequence of layers comprising a first convolution layer 402, an activation layer implementing a ReLU function 404 and a second convolution layer 406, the weights corresponding to each output channel of the first convolution layer 402 are scaled in accordance with a corresponding scaling factor $s_i$. It will be evident to a person of skill in the art that the matrix notation of FIG. 4 means that all of the weights of the first convolution layer 402 that correspond to the same output channel are scaled by the same scale factor. This can be viewed as changing the quantisation step size of the weights and outputs of the first convolution layer 402. The weights associated with each input channel of the second convolution layer 406 are then scaled inversely ( $1/s_i$ ) to compensate. For example, if the $i^{th}$ output channel of the first convolution layer 402 corresponds to the $j^{th}$ input channel of the second convolution layer 406 then all the weights associated with the $j^{th}$ input channel of the second convolution are scaled by $1/s_i$. In many cases, the $i^{th}$ output channel of the first convolution layer 402 corresponds to the $i^{th}$ input channel of the second convolution layer 406 such that $i = j$. It will be evident to a person of skill in the art that the matrix notation of FIG. 4 means that all of the weights of the second convolution layer 406 that correspond to the same input channel are scaled by the same scale factor. Where there is a bias per filter which is added to the output of each tensel in the corresponding output channel, the bias for each output channel would also be scaled by the corresponding scaling factor. For example, the bias for the $i^{th}$ output channel would be scaled by the $i^{th}$ scaling factor $s_i$.

This method takes advantage of the scale invariance of the ReLU function implemented by the activation layer 404. This method allows activation channel equalisation without additional operations to implement the network and without changing the format of the output of the sequence. However, while the objective of this known method is to achieve activation channel equalisation, since the scaling factors also affect the weight quantisation, limits are put on the scaling factors to avoid increasing the weight quantisation error. Therefore this method known to the Applicant for implementing activation channel equalisation does not fully equalize the channels.

In another method known to the Applicant, which is not an admission that it is well-known or that it is known outside the Applicant company, is scaling the weights in a similar manner as shown in FIG. 4, but instead of selecting the weight scaling factors to perform activation channel equalisation, selecting the weight scaling factors to perform weight channel equalisation (e.g. to optimize the quantisation of the weights). However, since the weight scaling factors are selected to optimise the weight channel equalisation, this does not achieve activation channel equalisation. Accordingly, the weight scaling method can be used to optimize the weight channel equalisation or the activation channel equalisation, or to compromise between them, but not to optimize both simultaneously. Since the weight channel equalisation and the activation channel equalisation are linked (coupled) by the weights, weight scaling cannot be used to do both optimally. Accordingly, in the weight scaling method there has to be a trade-off between weight channel equalisation and activation channel equalisation.

Accordingly, described herein are methods and systems for implementing activation channel equalisation for the output of a convolution layer in a manner in which the activation channel equalisation is separated or de-coupled from the weight channel equalisation. Specifically, in the methods and systems described herein, instead of performing activation channel equalisation by scaling the weights of the first convolution layer of the described sequence, the activation channel equalisation is performed by applying a per channel scaling factor after the first convolution layer and before the second convolution layer. Like the known method described with respect FIG. 4, the scaling is then reversed (or compensated for) in the subsequent convolution layer in the sequence by applying the inverse scales to the weights thereof. By reversing the scaling in the subsequent convolution layer the different formats for the different channels of the first convolution layer do not need to be tracked through the remainder of the layers of the neural network.

While this method, compared to the method described with respect to FIG. 4, involves performing an additional operation, by separating the activation channel equalisation from the weight quantisation this method allows for full activation channel equalisation of the output of a convolution layer. Furthermore, some neural network accelerators have hardware that can efficiently perform a channel-wise multiplication allowing for the additional operation to be implemented efficiently. For example, as described in more detail below, the Applicant's neural network accelerator comprises a tensel rescale processing unit which can efficiently perform a channel-wise multiplication.

The described method has been specifically designed and adapted to a specific technical implementation of the method - implementation on a neural network accelerator (NNA) comprising a convolution processing unit which is configured to accelerate convolution operations and one or more hardware units configured to perform per channel multiplication (e.g. a tensel rescale processing unit and/or an element wise operations processing unit) - that is motivated by technical considerations of the internal functioning of the neural network accelerator. Specifically, the method has been adapted to take advantage of the one or more hardware units configured to perform per channel multiplication of the NNA so as to improve the accuracy at which a sequence of layers of a neural network comprising two convolution layers separated by none, one or more than one middle layer is implemented while still being able to process the sequence of layers in a hardware efficient manner. A person of skill in the art would generally be reluctant to add an extra operation to such a sequence of layers of a neural network for fear of requiring more computing resources and causing inefficiencies. However, the noted concern about inefficient processing with the extra layer is not substantiated when an NNA has hardware that can efficiently perform per channel scaling.

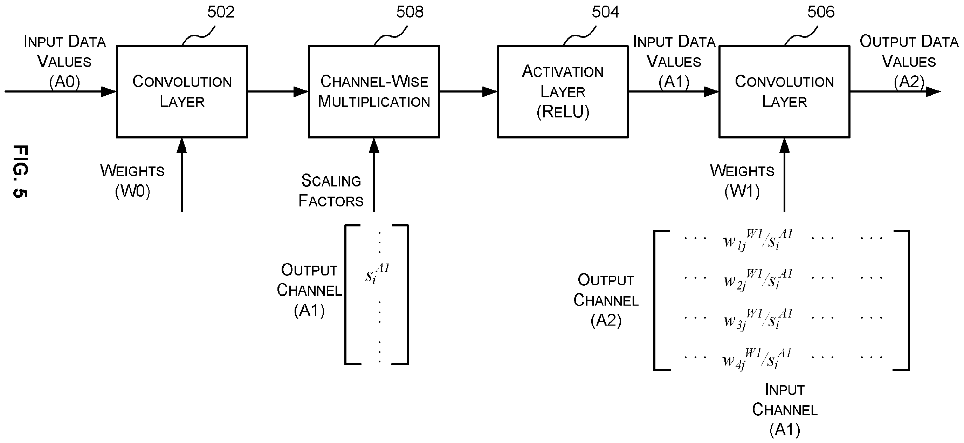

An example implementation of this activation channel equalisation method for a sequence of layers comprising a first convolution layer 502, an activation layer implementing a ReLU function 504, and a second convolution layer 506 is illustrated in FIG. 5. In this method, a channel-wise multiplication 508 is inserted between the first convolution layer 502 and the activation layer 504 to apply a per channel activation scaling factor to the output of the first convolution layer 502. In particular, there is an activation scaling factor for each output channel of the first convolution layer 502, and the channel-wise multiplication 508 applies the $i^{th}$ activation scaling factor $s_i^{A1}$ to the $i^{th}$ output channel of the first convolution layer 502. An inverse scaling factor $1/s_i^{A1}$ is then applied to the weights for the corresponding input channel to the second convolution layer 506. For example, if the $i^{th}$ output channel of the first convolution layer 502 corresponds to the $j^{th}$ input channel to the second convolution layer 506, the inverse of the $i^{th}$ activation scaling factor (i.e. $1/s_i^{A1}$) is applied to the weights associated with the $j^{th}$ input channel.

As described above, since the scaling is applied directly to the output channels and not via the weights of the first convolution layer, the weight channel equalisation for the first convolution layer 502 is separated from the activation channel equalisation of the first convolution layer 502. This allows for full activation channel equalisation. In other words, it allows the output of the first convolution layer to be more optimally quantised. Furthermore, de-coupling the weight channel equalisation for the first convolution layer from the activation channel equalisation for the first convolution layer reduces the complexity of choosing scaling factors for the activation channel equalisation since the effect of the scaling factors on the quantisation of the weights does not have to be taken into account.

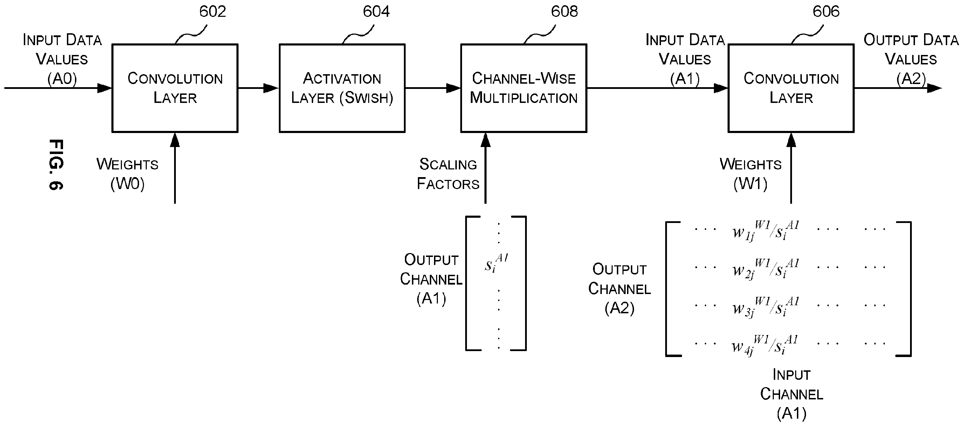

Although FIG. 5 shows a method of implementing activation channel equalisation for a specific sequence of layers comprising a first convolution layer, an activation layer implementing a ReLU function, and a second convolution layer, the described activation channel equalisation method is not limited to such a sequence of layers. In contrast, the described method can be used for any sequence of layers in which two convolution layers are separated by any layer or operation including (i) a scale invariant layer or operation, such as, but not limited to an activation layer that implements a LReLU function or a pooling layer, and (ii) a non-scale invariant layer or operation such as, but not limited, an activation layer that implements a swish function or a hard-swish function. A layer or function $f(x)$ is said to be scale invariant if $f(\alpha x) = \alpha f(x)$ for positive $\alpha$. In contrast, a layer or function $f(x)$ is non scale invariant if $f(\alpha x) \neq \alpha f(x)$. The layer or operation between the two convolution layers may be referred to herein as the middle layer or operation. The described methods can also be used when there is no middle layer between the two convolution layers or if there is more than one layer or operation between the two convolution layers. If, however, a layer or operation situated between the two convolution layers is not scale invariant then the activation channel equalisation is performed after that middle layer or operation. This is illustrated in FIG. 6.

In particular, FIG. 6 illustrates an example implementation of the activation channel equalisation method for a sequence of layers comprising a first convolution layer 602, an activation layer implementing a swish function 604 (wherein the swish function is a non-scale invariant function), and a second convolution layer 606. In this example, a channel-wise multiplication 608 is inserted between the activation layer 604 and the second convolution layer 606 to apply a per channel activation scaling factor to the output of the activation layer 604. In particular, there is an activation scaling factor per channel of the first convolution layer 602 output, and the channel-wise multiplication 608 applies the $i^{th}$ activation scaling factor $s_i^{A1}$ to the $i^{th}$ output channel of the activation layer 504. Like the example of FIG. 4, the inverse activation scaling factor $1/s_i^{A1}$ is then applied to the weights for the corresponding input channel of the second convolution layer 606. For example, if the $i^{th}$ output channel of the activation layer 604 corresponds to the $j^{th}$ input channel of the second convolution layer 606, the inverse of the $i^{th}$ activation scaling factor (i.e. $1/s_i^{A1}$) is applied to the weights associated with the $j^{th}$ input channel.

Where the middle layer or operation is scale invariant then the activation channel equalisation may be performed before or after the middle layer or operation (e.g. as shown in FIG. 5 or FIG. 6). However, as described in more detail below, it may be advantageous, in some cases, to perform the activation channel equalisation prior to the middle layer or operation.

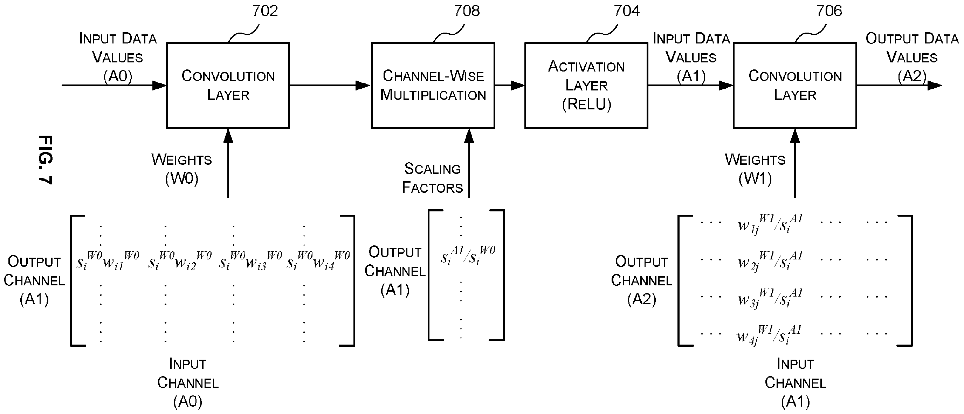

An additional advantage of separating the activation channel equalisation of the first convolution layer from the weight channel equalisation of first convolution layer is that the weights of the first convolution layer can also be channel equalised. For example, in some cases, in addition to performing activation channel equalisation by applying a per channel activation scaling factor to a tensor between the two convolution layers, a per channel weight scaling factor may be applied to the weights of the first convolution layer to perform weight channel equalisation. The per weight scaling factor may then be reversed (or compensated) by applying the inverse weight scaling factors to the output of the first convolution layer. Reference is now made to FIG. 7 which illustrates a first example implementation for performing both activation channel equalisation and weight channel equalisation for a first example sequence of layers.

In particular, FIG. 7 illustrates an example method for performing activation channel equalisation and weight channel equalisation for a first convolution layer 702 in a sequence of layers comprising a first convolution layer 702, a scale invariant layer or function 704 (e.g. an activation layer that implements a ReLU function), and a second convolution layer 706. In this example, like the example of FIG. 5, a channel-wise multiplication 708 is inserted between the first convolution layer 702 and the scale invariant layer (e.g. the activation layer that implements a ReLU function 704) to apply a per channel activation scaling factor to the output of the first convolution layer 702. In particular, the channel-wise multiplication 708 applies the $i^{th}$ activation scaling factor $s_i^{A1}$ to the $i^{th}$ output channel of the first convolution layer 702. Like the example of FIG. 5, an inverse scaling factor $1/s_i^{A1}$ is then applied to the weights associated with the corresponding input channel of the second convolution layer 706. However, in addition, a per weights channel scaling factor is applied to the weights of the first convolution layer 702. In particular, there is a weight scaling factor for each output channel of the first convolution layer 702, and the $i^{th}$ weight scaling factor $s_i^{W0}$ is applied to the weights used to generate the $i^{th}$ output channel of the first convolution layer 702. Then the per channel weight scaling is reversed by applying an inverse of the weight scaling factor $1/s_i^{W0}$ to the $i^{th}$ output channel by the channel-wise multiplication 708. Accordingly, in this example, the channel-wise multiplication 708 performs both (i) the reversal of the per channel weight quantisation, and (ii) the per channel activation equalisation.

Having both per-channel weight scaling factors and per-channel activation scaling factors allows the weight scaling factors to be selected to optimize the weight channel equalisation of the first convolution layer 702 and the activation scaling factors to be selected to optimize the activation channel equalization of the output of the first convolution layer 702. Specifically, de-coupling the weight channel equalisation of the first convolution layer and the output channel equalisation of the first convolution layer allows the activation scaling factors to be directed to equalising the activation channels, and the weight scaling factors to be directed to equalising the weight channels. This allows both the weight channel equalisation and the activation channel equalisation to be optimised. It also reduces the complexity in selecting the scaling factors. For example, when selecting the activation scaling factors their effect on the weights of the first convolution layer 702 does not need to be taken into account.

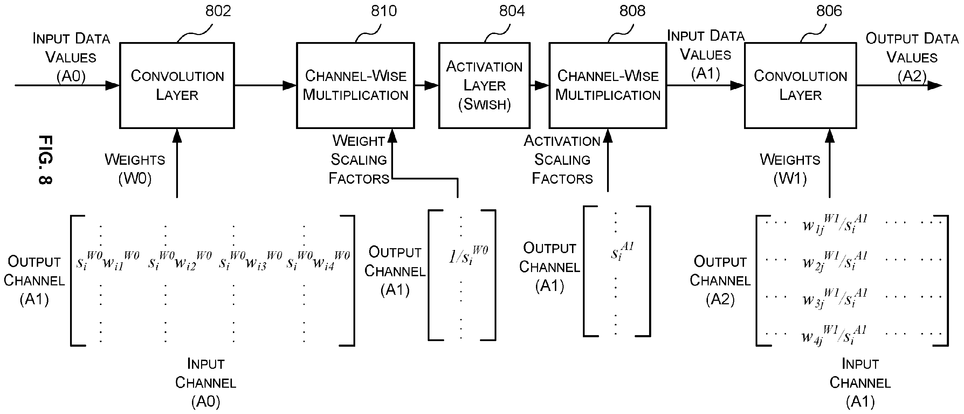

Where the middle layer or operation is not scale invariant then, as described above, the per channel activation equalisation is performed after the middle layer or operation. Also, in these cases, the per channel weight equalisation is reversed prior to the middle layer or operation. This means that when both weight channel equalisation and activation channel equalisation are performed, the reversal of the per channel weight scaling may be performed separately (e.g. by a separate channel-wise multiplication) from the per channel activation scaling. This is illustrated in FIG. 8.

In particular, FIG. 8 illustrates an example method for performing activation channel equalisation and weight channel equalisation for a first convolution layer 802 that is part of sequence of layers comprising a first convolution layer 802, a non-scale invariant layer or function 804 (e.g. an activation layer that implements a swish function), and a second convolution layer 806. In this example, like the example of FIG. 6, a channel-wise multiplication 808 is inserted between the non-scale invariant layer (e.g. the activation layer implementing a swish function) 804 and the second convolution layer 806 to apply a per channel activation scaling factor to the output of the non-scale invariant layer. In particular, the channel-wise multiplication 808 applies the $i^{th}$ activation scaling factor $s_i^{A1}$ to the $i^{th}$ output channel of the non-scale invariant layer 804. Like the example of FIG. 6, the inverse of each activation scaling factor ($1/s_i^{A1}$) is then applied to the weights for the corresponding input channel of the second convolution layer 806. However, in addition, a per channel weight scaling factor is applied to the weights of the first convolution layer 802. In particular, the $i^{th}$ weight scaling factor $s_i^{W0}$ is applied to the weights used to generate the $i^{th}$ output channel of the first convolution layer 802. Then, the per channel weight scaling is reversed by applying an inverse of the $i^{th}$ weight scaling factor $1/s_i^{W0}$ to the $i^{th}$ output channel by an additional channel-wise multiplication 810 inserted between the first convolution layer 802 and the non-scale invariant layer 804. Accordingly, in this example, the first channel-wise multiplication 808 applies the per-channel activation scaling factors and the second channel-wise multiplication 810 applies the inverses of the per-channel weight scaling factors.

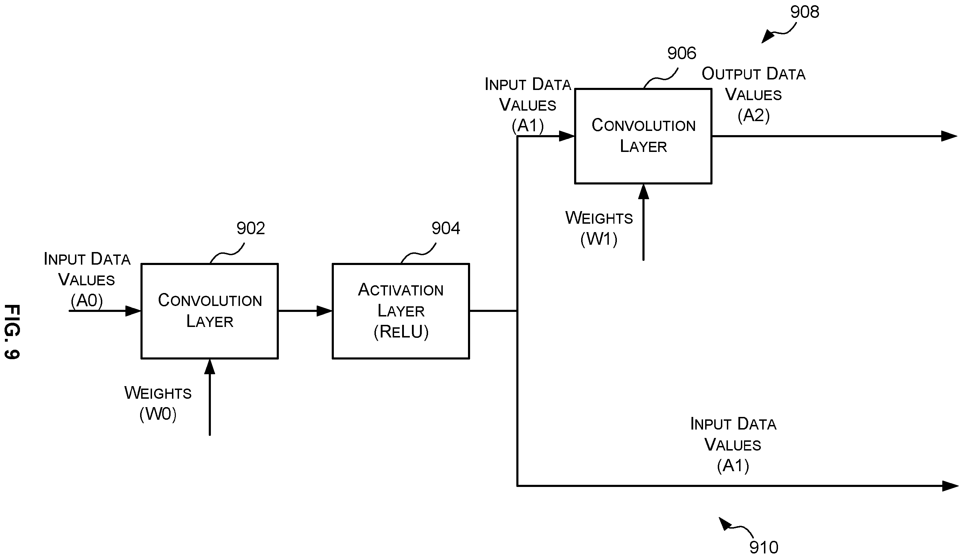

Although the examples above show the activation channel equalisation method being applied to a sequence of layers that are part of the same direct path (e.g. the first convolution layer, the middle layer and the second convolution layer are all part of the same direct path such that there are no branches between them), the method is not limited to such a sequence. Specifically, the activation channel equalisation method described herein may also be applied to a sequence of layers wherein one of the convolution layers is part of a branch that the other convolution layer is not part of. In other words, the activation channel equalisation method described herein may be applied wherein there is a branch in the neural network between the layers of the sequence. However, where the described activation channel equalisation method is applied to a sequence of layers wherein one of the convolution layers is part of a branch that the other convolution layer is not part of, additional operations may be performed to ensure format consistency between the branches. This explained by way of example via FIGS. 9-12.

Specifically, FIG. 9 illustrates a first example sequence of a first convolution layer 902, a middle layer 904 (which in this example is an activation layer implementing a ReLU function), and a second convolution layer 906 wherein one of the convolution layers forms part of a branch that the other convolution layer does not form part of. Specifically, in this example, after the first convolution layer 902 and the middle layer 904, the output of the middle layer 904 is provided to a first branch 908 that comprises the second convolution layer 906, and a second branch 910. The outputs of the two branches may then, for example, be subsequently combined (e.g. via summation). Accordingly, in this example, the second convolution layer 906 is part of a branch 908 that the first convolution layer 902 does not form part of.

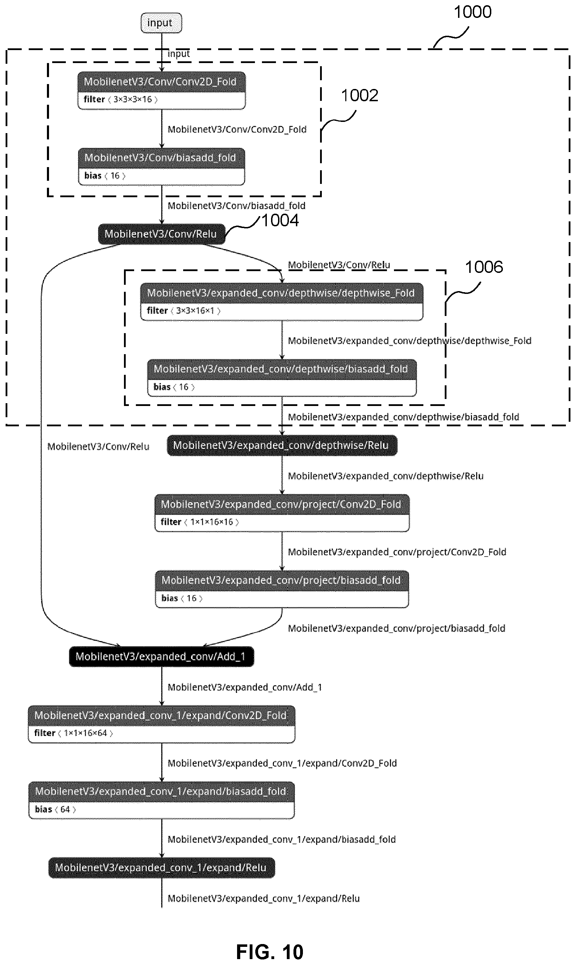

The sequence of layers shown in FIG. 9 occurs in many neural networks. For example, FIG. 10 shows this sequence occurring in the MobileNet V3 neural network at 1000. Specifically, the sequence 1000 comprises a first convolution layer 1002 followed by an activation layer implementing a ReLU function 1004. The activation layer 1004 feeds two branches, one of which comprises a second convolution layer 1006.

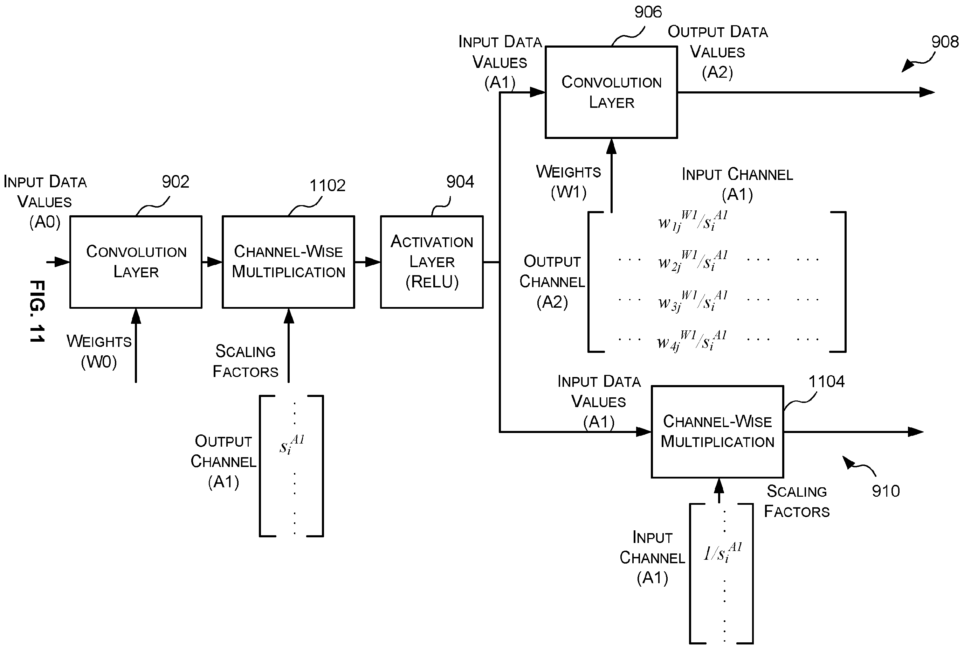

Referring back to FIG. 9, if the middle layer 904 is a scale invariant layer, then to implement the activation channel equalisation method described herein a channel-wise multiplication may be inserted between the first convolution layer 902 and the middle layer 904 to apply a per-channel activation scaling factor to the output of the first convolution layer 902; and the inverse activation scaling factors may be applied to the weights related to the corresponding input channels of the second convolution layer 906. However, due to the branch structure this would result in the output of one of the two branches 908, 910 having a per tensor format and the output of the other of the two branches having a per channel format. Specifically, all channels of the output of the first branch 908 will have the same format (since the per channel scaling is reversed by the weight scaling applied to the second convolution layer 906) whereas the output of the second branch 910 will have a per channel format. Accordingly, an additional per channel operation may be performed on the second branch 910 to place the data in that branch in the same format as the data in the other branch 908. This is illustrated in FIG. 11.

Specifically, FIG. 11 illustrates an example implementation of the activation channel equalisation method described herein for the sequence of layers shown in FIG. 9 where the middle layer 904 is scale invariant. As discussed above, a first channel-wise multiplication 1102 is inserted between the first convolution layer 902 and the middle layer 904 to apply a per-channel scaling factor to the output of the first convolution layer 902 to channel equalise the output. The inverses of the activation scaling factors are then applied to the weights related to the corresponding input channels for the second convolution layer 906. A second channel-wise multiplication 1104 is then inserted in the second branch 910 to apply the inverses of the activation scaling factors to the data in that path.

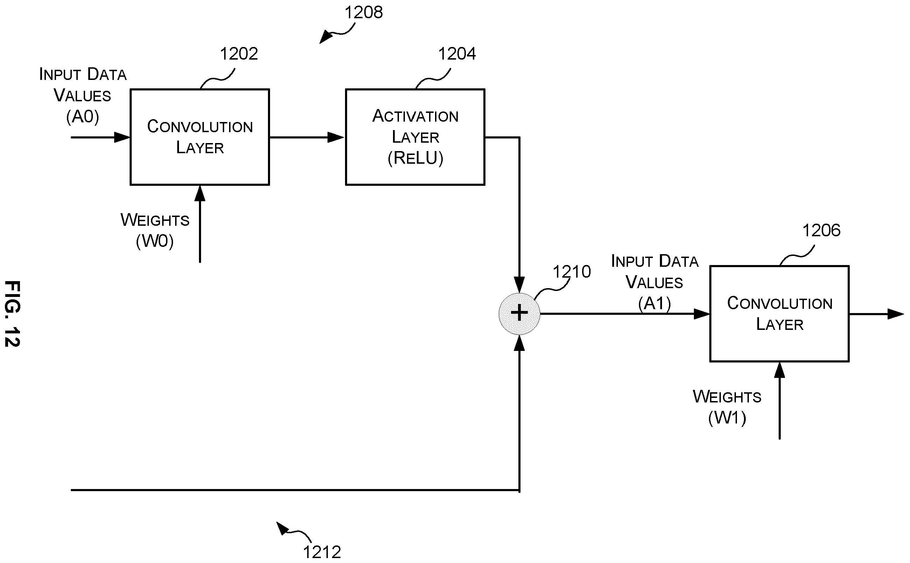

Reference is now made to FIG. 12 which illustrates a second example sequence of a first convolution layer 1202, a middle layer 1204 (which in this example is an activation layer implementing a ReLU function), and a second convolution layer 1206 wherein one of the convolution layers forms part of a branch that the other convolution layer does not form part of. Specifically, in this example the first convolution layer 1202 and the middle layer 1204 form part of a first branch 1208 which is combined 1210 (e.g. by an addition), with the output of a second branch 1212. The output of the combination 1210 is provided as input to the second convolution layer 1206. Accordingly, in this example, the first convolution layer 1202 is part of a branch 1208 that the second convolution layer 1206 does not form part of.

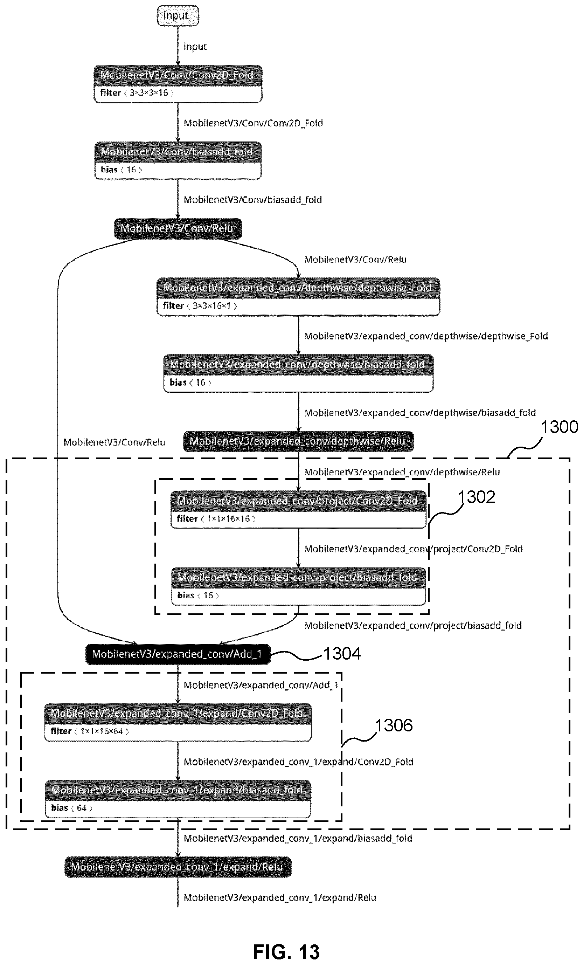

The sequence of layers shown in FIG. 12 occurs in many neural networks. For example, FIG. 13 shows this sequence occurring (without a middle layer - e.g. without the activation layer implementing a ReLU function after the first convolution layer) in the MobileNet V3 neural network at 1300. Specifically, the sequence 1300 comprises a first convolution layer 1302 in a first branch and the output thereof is combined (via an addition 1304) with the output of a second branch. The output of the combination is then provided to a second convolution layer 1306.

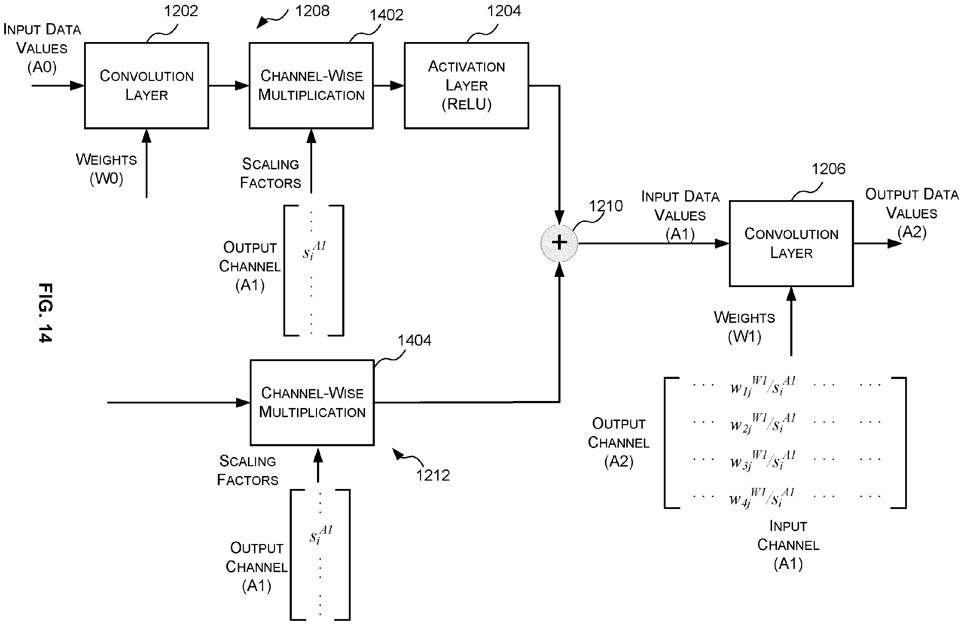

Referring back to FIG. 12, if the middle layer 1204 is a scale invariant layer, then to implement the activation channel equalisation method described herein a channel-wise multiplication may be inserted between the first convolution layer 1202 and the middle layer 1204 to apply a per-channel activation scaling factor to the output of the first convolution layer 1202; and the inverse activation scaling factors may be applied to the weights of the second convolution layer 1206. However, due to the branch structure this would result in the outputs of the two branches 1208, 1212 being in different formats. Specifically, all channels of the output of the first branch 1208 will have a per channel format whereas the output of the second branch 1212 will have a per tensor format. Accordingly, an additional per channel operation may be performed in the second branch 1212 to place the output thereof in the same format as the output from the first branch 1208. This is illustrated in FIG. 14.

Specifically, FIG. 14 illustrates an example implementation of the activation channel equalisation method described herein for the sequence of layers shown in FIG. 12 where the middle layer 1204 is scale invariant. As discussed above, a first channel-wise multiplication 1402 is inserted between the first convolution layer 1202 and the middle layer 1204 to apply a per-channel scaling factor to the output of the first convolution layer 1202 to channel equalise the output. The inverses of the activation scaling factors are then applied to the weights for the second convolution layer 1206. A second channel-wise multiplication 1404 is then inserted in the second branch 1212 to apply the per channel activation scaling factors to a tensor in that path. Where the middle layer is non-scale invariant, then if there is sufficient precision between the middle layer 1204 and the combination 1210 to accurately represent the un-equalised data then the per channel activation scaling factors may be applied after the combination 1210.

Although FIGS. 11 and 14 illustrate example methods of implementing activation channel equalisation for specific sequences of layers, it will be evident that these implementations may be modified to also implement weight channel equalisation for the first convolution layer as described above with respect to FIG. 7. Specifically, a per channel weight scaling factor may be applied to the weights of the first convolution layer, and the inverses of the weight scaling factors may be applied to the output of the first convolution layer by the first channel-wise multiplication.

As described above, neural networks are often expensive to implement in terms of computation, bandwidth and power. Accordingly, neural network accelerators (NNAs) have been developed that allow neural networks, including DNNs, to be implemented in an efficient manner (e.g., in a manner that requires less silicon area or less processing power).

An NNA is hardware that is designed to accelerate the processing of a neural network. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. NNAs have one or more hardware processing units (which may simply be referred to as processing units) which are each designed to accelerate one or more neural network operations. A neural network operation is defined herein as an operation that is used to implement all or a part of a neural network layer. A neural network layer may be implemented by one or more neural network operations. Example neural network operations include, but are not limited to, convolution operations, non-linear operations, pooling operations and normalisation operations.

An NNA may therefore have, for example, a convolution processing unit which is configured to accelerate convolution operations, an activation processing unit which is configured to accelerate non-linear operations, a pooling processing unit which is configured to accelerate pooling operations, and/or a normalisation processing unit configured to accelerate normalisation operations. In such cases, the convolution processing unit may be configured to implement the convolution layers described herein and the activation processing unit may be configured to implement the activation layers described herein. It will be evident to a person of skill in the art that this is just an example set of hardware processing units that an NNA may have, and NNAs may have additional hardware processing units, fewer network processing hardware units or a different combination of hardware processing units.

Some NNAs may comprise a processing unit that can efficiently implement a channel-wise multiplication. For example, as described in more detail below, the Applicant's NNA comprises one or more tensel rescale processing units which can efficiently implement a channel-wise multiplication. In these cases, one or more of the channel-wise multiplications described herein may be implemented by the tensel rescale processing unit of the NNA.

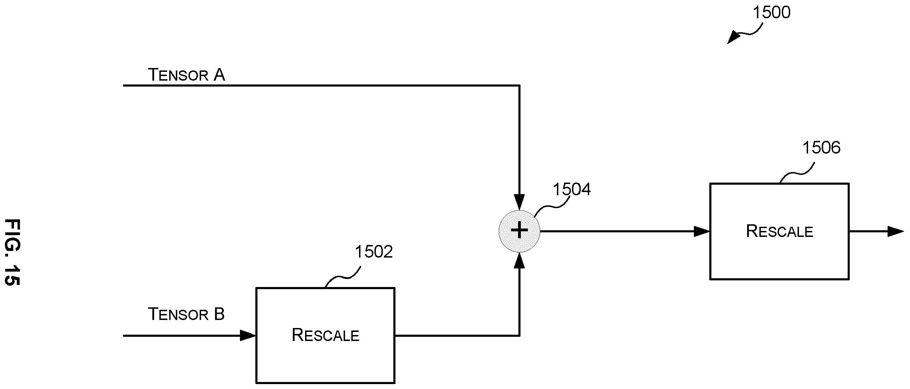

Even where an NNA comprises a tensel rescale processing unit, or another processing unit that is efficient at implementing a channel-wise multiplication, it may be more efficient, in some scenarios to perform the channel-wise multiplication in combination with another operation. For example, where a channel-wise multiplication precedes a combination operation (such as an addition) as shown in FIG. 14 (e.g. the second channel-wise multiplication 1404 precedes the combination 1210 (e.g. addition)), depending on the available processing units of the NNA, it may be more efficient to perform the channel-wise multiplication and the combination operation together (e.g. using the same processing unit). For example, some NNAs may comprise an element-wise operations (EWO) processing unit 1500 as shown in FIG. 15 which is configured to receive two tensors (tensor A and tensor B), potentially in different formats, rescale 1502 one of the input tensors (if in different formats), combine 1504 the two tensors (e.g. via addition, subtraction etc.) and then, optionally rescale 1506 the output. In such cases, it may be efficient to perform the channel-wise multiplication 1404 and the combination 1210 using the element-wise operations processing unit. Specifically, the channel-wise multiplication can be performed by the input rescaling 1502 of the EWO processing unit 1500. In other words, a separate channel-wise multiplication may not be performed, but instead the channel-wise multiplication may be performed as part of the combination operation by the EWO processing unit 1500 using the appropriate scaling factors. In some cases, using the EWO processing unit in this manner may work particularly well when the EWO processing unit can implement the combination (e.g. addition) in high precision (e.g. 32 bits or higher). For example, if the input tensor received from the first branch 1208 is in a higher precision (e.g. 16 bits) and the output rescaling 1506 rounds off the lower bits, performing the combination in higher precision allows the fractional bits (in terms of the activation format) of the two input tensors (e.g. input tensors A and B) to be combined before rounding. Otherwise, the output from the first branch 1208 may be first rounded to the activation format and then rounded again after being combined with the output from the second branch 1212, which may introduce more error.

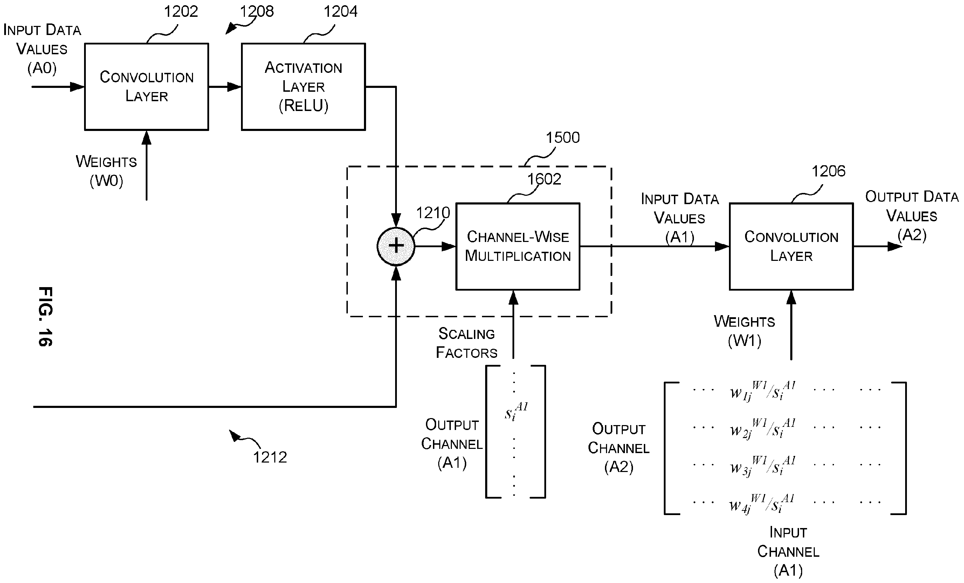

In some cases, instead of implementing activation channel equalisation for the sequence or pattern of layers shown in FIG. 12 as shown in FIG. 14 by having a channel-wise multiplication 1402, 1404 in each branch 1208, 1212, a single channel-wise multiplication 1602 may be performed on the output of the combination 1210 (e.g. addition). This is illustrated in FIG. 16. This not only removes one of the channel-wise multiplications, but since in this implementation the channel-wise multiplication is performed after the middle layer 1204 it can be implemented regardless of whether the middle layer is scale invariant. Furthermore, where an NNA comprises an EWO processing unit the channel wise multiplication can be performed by the output rescaling 1506 of the EWO processing unit 1500. This allows the combination 1210 and the channel-wise multiplication 1602 to be efficiently performed by a single unit. This may work particularly well when the path between the first convolution layer 1202 and the EWO processing unit output is sufficient to preserve the un-equalised activations. The amount of precision that would be sufficient depends on how different the un-equalised channel ranges are. For example, if the activations require a bit depth of 8 and the ratio of the largest and smallest scaling factors is less than $2^8$ then 16 bits would be sufficient. As described in more detail below, some neural network accelerators are configured to process a neural network over a series of hardware passes of the neural network accelerator. The example implementation shown in FIG. 16 would work particularly well if the first convolution layer and the combination can be performed in the same hardware pass so that the higher precision data generated by the first convolution layer does not have to be output from the neural network accelerator and re-loaded back in. However, this implementation may not be sufficient to remove the channel-wise multiplication in the second branch 1212 if there is another channel-wise multiplication in the second branch 1212 due to activation channel equalisation being performed for an earlier convolution layer.

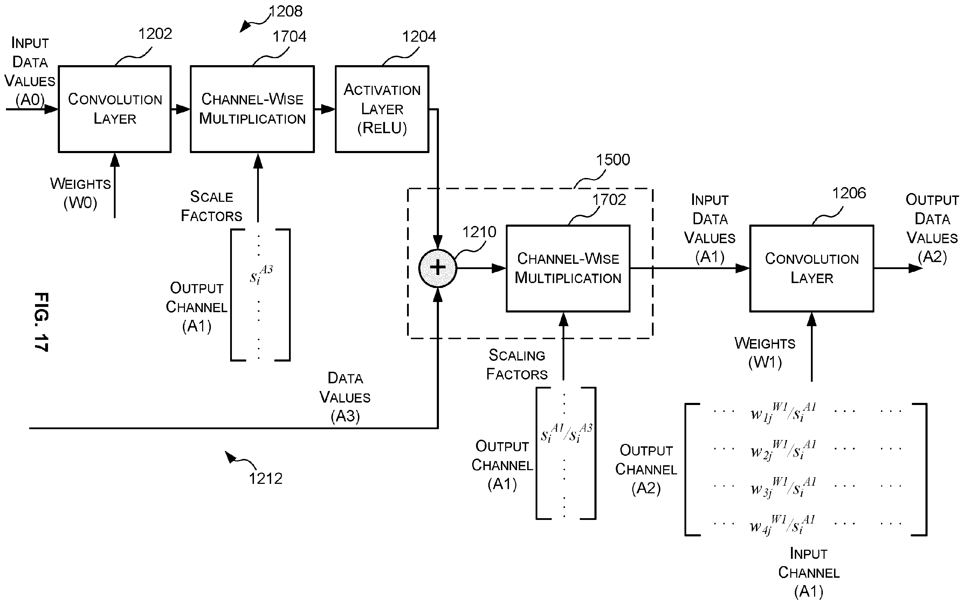

However, if there is another channel-wise multiplication in the second branch 1212 due to activation channel equalisation being performed for an earlier convolution layer, all the channel-wise multiplications in the second branch 1212 can be removed by having a channel-wise multiplication 1702 on the output of the combination 1210 (e.g. addition) that applies both channel scaling factors (e.g. the activation scaling factors related to the first convolution layer and the activation scaling factors related to the previous convolution layer) as shown in FIG. 17. Then the scaling factors related to the previous convolution layer are applied to the output of the first convolution layer 1202 via a second channel-wise multiplication 1704. Like the example shown in FIG. 16, where an NNA comprises an EWO processing unit 1500, the combination 1210 and the channel-wise multiplication 1702 performed on the output of the combination can both be performed by the EWO processing unit 1500. Specifically, the output rescaling 1506 of the EWO processing unit 1500 can be used to perform the channel-wise multiplication 1702. This may work particularly well when the path between the first convolution layer 1202 and the EWO processing unit output is sufficient to preserve the un-equalised activations. The amount of precision that would be sufficient depends on how different the un-equalised channel ranges are. For example, if the activations require a bit depth of 8 and the ratio of the largest and smallest scaling factors is less than $2^8$ then 16 bits would be sufficient.

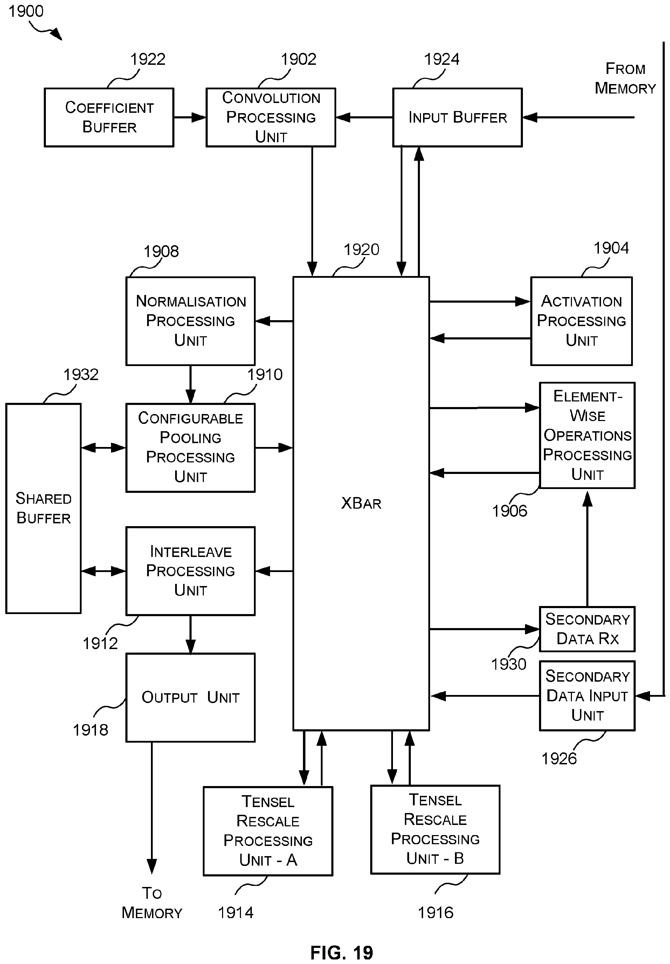

An example NNA which has a tensel rescale processing unit and an element-wise operations processing unit is described below with respect to FIG. 19.

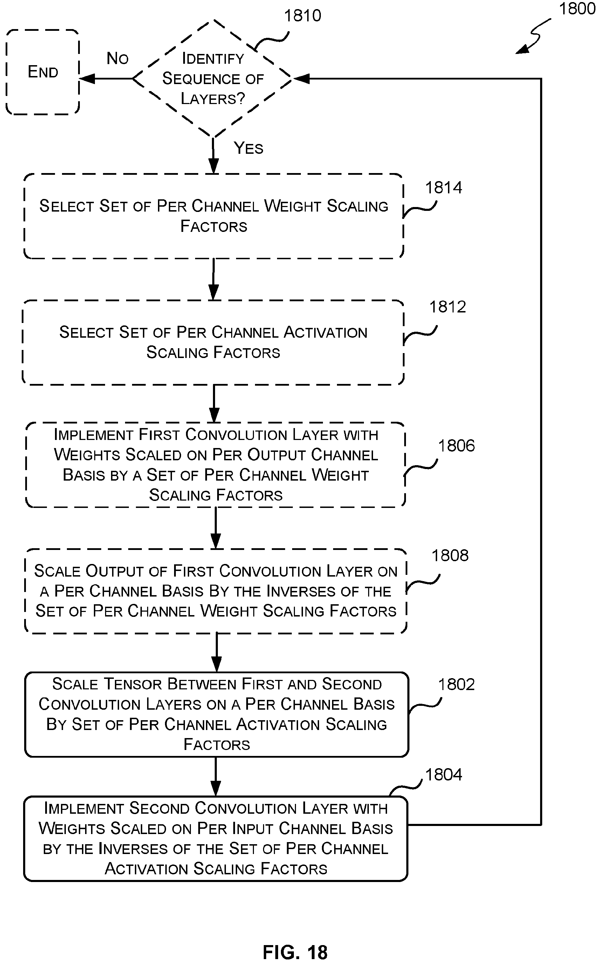

Reference is now made to FIG. 18 which illustrates an example method 1800 of processing data in accordance with a neural network using activation channel equalisation wherein the neural network includes a sequence of layers comprising a first convolution layer, a second convolution layer, and none, one or more than one middle layer between the first and second convolution layers. The method 1800 begins at block 1802 where a tensor in the neural network, after the first convolution layer and before the second convolution layer, is scaled on a per channel basis by a set of per channel activation scaling factors. Specifically, there is an activation scaling factor for each output channel of the first convolution layer, and each activation scaling factor is applied to tensels in a corresponding channel of the tensor to scale those tensels. Generally, the $i^{th}$ activation scaling factor is applied to the tensels in the $i^{th}$ channel of the tensor. For example, the $1^{st}$ activation scaling factor is applied to the tensels in the first channel of the tensor, the $2^{nd}$ activation scaling factor is applied to the tensels in the second channel of the tensor, and so on.

In some cases, the per channel activation scaling factors may be applied to the output tensor of the first convolution layer as shown in, for example, FIGS. 5, 7, 11 and 14. In other cases, the per channel activation scaling factors may be applied to the output tensor of the middle layer as shown in, for example, FIGS. 6 and 8. In yet other cases, the per channel activation scaling factors may be applied to the output tensor of a combination element or layer that combines the output tensor of the middle layer with another tensor as shown in, for example, FIGS. 16 and 17. As described above, where the middle layer is scale invariant, the activation scaling factors may be applied before or after processing data in accordance with the middle layer. However, if the middle layer is scale invariant the activation scaling factors are applied after data has been processed in accordance with the middle layer.

In some cases, the per channel activation scaling factors may be applied to a tensor by performing a channel-wise multiplication between the tensor and the activation scaling factors. Where the neural network is implemented or processed on an NNA with a tensel rescale processing unit (or other unit that is efficient at performing channel-wise multiplications), the channel-wise multiplication may be implemented by the tensel rescale processing unit (or the other unit). Once the per channel activation scaling factors have been applied to the relevant tensor, the method 1800 proceeds to block 1804.

At block 1804, the second convolution layer is implemented with weights that have been scaled on a per input channel basis by the inverses of the activation scaling factors. Specifically, each output channel of the first convolution layer will correspond to an input channel of the second convolution layer. Then, if the $i^{th}$ output channel of the first convolution layer is associated with the $i^{th}$ activating scaling factor $s_i^A$, and the $i^{th}$ output channel of the first convolution layer corresponds to the $j^{th}$ input channel of the second convolution layer, then the weights associated with the $j^{th}$ input channel of the second convolution layer are scaled by the inverse of the $i^{th}$ activating scaling factor (i.e., $1/s_i^A$). For example, if the first output channel of the first convolution layer corresponds to the first input channel of the second convolution layer, and the first output channel of the first convolution layer is associated with the first activation scaling factor $s_1^A$, then the weights associated with the first input channel to the second convolution layer are scaled by $1/s_1^A$. In many cases the $i^{th}$ output channel of the first convolution layer 402 corresponds to the $i^{th}$ input channel of the second convolution layer 406 such that $i = j$.

A set of weights of a convolution layer are said to be associated with a particular input channel if they are applied to the tensels of that input channel. For example, as described above, implementing a convolution layer comprises convolving one or more filters (each comprising a set of weights) with the input tensor. Each filter comprises one or more channels of weights, wherein each channel of weights of a filter is applied to only one input channel of the convolution layer. For example, for a 2D convolution the input tensor and each filter have the same number of channels and the first channel of a filter is applied to the first channel of the input tensor, the second channel of a filter is applied to the second channel of the input tensor, and so on.

In some cases, the weights of the second convolution layer may be scaled offline, i.e., prior to processing data in accordance with the neural network. However, in other cases, the weights may be scaled on-the-fly or online, i.e., as data is being processing in accordance with the neural network (e.g. during a forward pass of the neural network).

In some cases, the method 1800 may further comprise implementing per output channel weight quantisation for the first convolution layer. In these cases, the method 1800 may further comprise blocks 1806 and 1808. At block 1806, the first convolution layer is implemented with per output channel scaled weights. Specifically, there is a weight scaling factor for each channel of the output of the first convolution layer and the weights associated with a specific output channel (i.e. the weights that are used to generate that output channel) are scaled by the weight scaling factor for that channel. As described above, in some cases the weights for a convolution layer are divided into a plurality of filters wherein each filter generates an output channel. In these cases, each filter is associated with a different output channel, thus the weights of each filter are associated with a specific weight scaling factor and are scaled by that weight scaling factor.

In some cases, the weights of the first convolution layer may be scaled offline, i.e., prior to processing data in accordance with the neural network. Where the neural network is implemented by a neural network accelerator this may mean providing the neural network accelerator with the already scaled weights. However, in other cases, the weights may be scaled on-the-fly or online, i.e., as data is being processing in accordance with the neural network (e.g. during a forward pass of the neural network). For example, if the neural network is implemented by a neural network accelerator this may mean providing the neural network accelerator with the original weights and the weight scaling factors, and the neural network accelerator performing the scaling of the weights.

At block 1808, the output of the first convolution layer is scaled on a per-channel basis by the inverses of the weight scaling factors to compensate for the weight scaling performed in block 1806. For example, if the first output channel is associated with a weight scaling factor $s_1^W$ then the tensels in the first output channel are scaled by $1/s_1^W$. In general, if the $i^{th}$ output channel is associated with a weight scaling factor $s_i^W$ then the tensels in the $i^{th}$ output channel are scaled by $1/s_i^W$.

In some cases, the inverses of the per channel weight scaling factors may be applied to a tensor by performing a channel-wise multiplication between the tensor and the inverses of the weight scaling factors. Where the neural network is implemented or processed on an NNA with a tensel rescale processing unit (or other unit that is efficient at performing channel-wise multiplications), the channel-wise multiplication may be implemented by the tensel rescale processing unit (or the other unit).

In some cases, where the activation scaling factors of block 1802 are applied to the output tensor of the first convolution layer, blocks 1802 and 1808 may be performed together as shown in FIG. 7. In other words, in these cases, the activation scaling factor associated with an output channel of the first convolution layer, and the inverse of the weight scaling factor associated with that output channel may be applied to the output tensor of the first convolution layer at the same time. In such cases, they may be applied at the same time by the same channel-wise multiply operation. In other cases, where the activation scaling factors of block 1802 are not applied to the output tensor of the first convolution layer, blocks 1802 and 1808 may be performed separately (and by separate channel-wise multiplication operations) as shown in FIG. 8.

Where one of the convolution layers of the sequence of layers forms part of a branch that the other convolution layer does not form part of then the method 1800 may further comprise channel-wise scaling a tensor in the other branch. In one example, as described above with respect to FIGS. 9-11, where the second convolution layer forms part of a branch that the first convolution layer does not form part of, a tensor in another branch may be scaled on a per channel basis by the inverses of the activation scaling factors. For example, as shown in FIG. 11, if the first output channel of the first convolution layer is associated with an activation scaling factor $s_1^A$, and the first output channel of the first convolution layer corresponds to the first channel of the tensor in the other branch, then the first channel of the tensor in the other branch is scaled by $1/s_1^A$. In another example, as described above with respect to FIGS. 12-14, where the first convolution layer forms part of a branch that the second convolution layer does not format part of, a tensor in the other branch may be scaled on a per channel basis by the activation scaling factors. For example, as shown in FIG. 14, if the first output channel of the first convolution layer is associated with an activation scaling factor $s_1^A$, and the first output channel of the first convolution layer corresponds to the first channel of the tensor in the other branch, then the first channel of the tensor in the other branch is scaled by $s_1^A$.

In some cases, the method 1800 may also comprise identifying the sequence of layers in the neural network (block 1810). This step may be performed offline. In other words, where the neural network is implemented by a neural network accelerator, this step may not be performed by the neural network accelerator, but instead may be performed by an external computing device (e.g. processor), such as, but not limited to, the computing device that controls the operation of the neural network accelerator.

In some cases, the method 1800 may also comprise identifying the activation scaling factors and/or the weight scaling factors (blocks 1812, 1814). The activation and/or weight scaling factors may be selected in any suitable manner.

One simple method (which may be referred to herein as the full range method or the minimum/maximum method) which could be used to select the scaling factors for a set of values (e.g. weights for a channel or input data values for a channel) comprises selecting, for a given mantissa bit depth $b$, the smallest exponent $exp$ that covers the range for the expected set of values $xr$. For example, for a given mantissa bit depth $b$, the exponent $exp$ can be chosen in accordance with equation (1) such that the number format covers the entire range of $x$ where $\lceil \cdot \rceil$ is the ceiling function:

$$exp = \lceil \log_2(\max(|x|)) \rceil - b + 1 \quad (1)$$

Although equation (1) is used to select an integer exponent, a similar equation could be used to select a floating point exponent. For example, to select a floating point exponent the ceiling function could be removed from equation (1).

Another method (which may be referred to as the weighted outlier method) is described in the Applicant's GB Patent Application No. 1718293.2, which is herein incorporated by reference in its entirety. In the weighted outlier method the exponent for a set of values (e.g. weights for a channel or input data values for a channel) is selected from a plurality of potential number exponents based on the weighted sum of the quantisation errors when a particular exponent is used, wherein a constant weight is applied to the quantisation errors for values that fall within the representable range of a format using that exponent and a linearly increasing weight is applied to the quantisation errors for the values that fall outside the representable range.

Yet another method (which may be referred to as the back-propagation method) is described in the Applicant's GB Patent Application No. 1821150.8, which is herein incorporated by reference in its entirety. In the back-propagation method the exponents that produce the best cost (e.g. a combination of DNN accuracy and DNN size (e.g. number of bits)) are selected by iteratively determining the gradient of the cost with respect to each exponent using back-propagation, and adjusting the exponents until the cost converges.

Finally, another method (which may be referred to as the end-to-end method) is described in the Applicant's GB Patent Application No. 1718289.0, which is herein incorporated by reference in its entirety. In the end-to-end method the exponents for the values of a DNN are selected one layer at a time according to a predetermined sequence wherein any layer is preceded in the sequence by the layer(s) on which it depends. The exponent for a set of values for a layer (e.g. a channel of weights or a channel of input data values) is selected from a plurality of possible exponents based on the error in the output of the DNN when each of the plurality of possible exponents is used to represent the set of values. Once the number format(s) for a layer has/have been selected any calculation of the error in the output of the DNN for a subsequent layer in the sequence is based on the network parameters of that layer being represented using the selected number format(s).

Since a format (e.g. exponent and bit depth) may have been selected for the whole tensor, the final scaling value may be selected as 2 to the power of the difference between the exponent for the whole tensor and the exponent determined in accordance with a method described above.

This scaling factor selection may be performed offline. In other words, where the neural network is implemented by a neural network accelerator, this step may not be performed by the neural network accelerator, but instead may be performed by an external computing device (e.g. processor), such as, but not limited to, the computing device that controls the operation of the neural network accelerator.

The method 1800 may be repeated for each such sequence of layers in the neural network.

Reference is now made to FIG. 19 which illustrates an example neural network accelerator (NNA) 1900 which may be used to implement at least a part of the method of FIG. 18. The NNA 1900 comprises a plurality of hardware processing units 1902, 1904, 1906, 1908, 1910, 1912, 1914, 1916; and a crossbar ("Xbar") 1920 that is coupled to the hardware processing units and can selectively form one of a plurality of pipelines from the hardware processing units. The phrase "forming a pipeline from the hardware processing units" is used herein to mean connecting the inputs and outputs of a set of hardware processing units such that the output of one hardware processing unit becomes the input to another hardware processing unit.

Each hardware processing unit 1902, 1904, 1906, 1908, 1910, 1912, 1914, 1916 comprises hardware configured to accelerate performing one or more neural network operations on input data. Specifically, each hardware processing unit 1902, 1904, 1906, 1908, 1910, 1912, 1914, 1916 comprises an input port configured to receive an input tensor, hardware logic to perform one or more operations on the input tensor, and an output port configured to output the results of the processing, which may be referred to as the output tensor. As described in more detail below, one or more of the hardware processing units may also comprise one or more additional ports to receive secondary data which is used to process the input tensor, and/or to write and/or read data from a buffer.

The NNA 1900 of FIG. 19 comprises the following hardware processing units: a convolution processing unit 1902 which is configured to perform convolution operations on the received input tensor, an activation processing unit 1904 which is configured to perform non-linear operations on the received input tensor, an element-wise operations processing unit 1906 which is configured to perform element-wise operations on the received input tensor, a normalisation processing unit 1908 which is configured to perform normalisation operations on the received input tensor, a configurable pooling processing unit 1910 described which is configured to selectively perform a pooling operation or a depth-wise convolution operation on the received input tensor, an interleave processing unit 1912 which is configured to performing interleaving or rearranging of the received input tensor, and tensel rescale processing units 1914, 1916 which are configured to scale or rescale an input tensor on a tensor or channel basis. Each of these hardware processing units are described in more detail below. It will be evident to a person of skill in the art that this is just an example set of hardware processing units and that other NNAs may have additional hardware processing units, fewer hardware processing units and/or different hardware processing units.

The NNA 1900 of FIG. 19 is configured to process a neural network in one or more hardware passes of the NNA 1900. In a hardware pass of the NNA 1900, the NNA 1900 loads input data into the NNA (e.g. from external memory) and processes that input data via a pipeline formed of one or more of the hardware processing units 1902, 1904, 1906, 1908, 1910, 1912, 1914, 1916, to generate processed data. In most hardware passes the processed data is then output from the NNA (e.g. to external memory) via an output unit 1918. However, in some cases, the processed data may remain in the NNA for use in a subsequent hardware pass. For example, as described in more detail below, it may take several passes of the convolution processing unit 1902 to generate a convolution layer output. Therefore, in some cases, the convolution processing unit 1902 may perform partial convolution processing in one hardware pass and store the results of that partial processing in the convolution processing unit 1902 (e.g. the accumulation buffer thereof); and then perform more partial convolution processing in one or more subsequent hardware passes and then combine the partial results generated in the hardware passes to generate the final convolution output. A convolution layer may be implemented over several hardware passes because of the internal storage restrictions of the NNA (e.g. the input buffer 1924 may not be large enough to store the entire input tensor and/or the coefficient buffer 1922 may not be large enough to store the entire tensor of weights) and/or processing restrictions of the NNA.

The input data for a hardware pass is loaded into the NNA via a data input unit 1924, 1926. The NNA may comprise a single data input unit 1924 or more than one data input unit 1924, 1926. As shown in FIG. 19, one of the data input units 1924 may be in the form of an input buffer 1924 which can be configured to store the input data for the hardware pass. The input buffer 1924 may be referred to as the primary data input unit. The input buffer 1924 may be coupled to both the convolution processing unit 1902 and the crossbar 1920, which allows the input buffer 1924 to provide the received input data to the convolution processing unit 1902 or the crossbar 1920. Although the input buffer 1924 is shown in FIG. 19 as a single input buffer, the input buffer may be formed of a plurality of banks. In some cases, it may only be possible to use the input buffer 1924 once in a hardware pass, thus the input buffer 1924 may either be able to provide input data to the convolution processing unit 1902 or the crossbar 1920 in a hardware pass, but not both.

The NNA 1900 of FIG. 19 comprises a second, secondary or alternate data input unit 1926 by which the input data for a hardware pass can be loaded into the NNA, which may be less complex and use less energy than the primary data input unit (e.g. the input buffer 1924). For example, the element-wise operations (EWO) processing unit 1906 may be able to perform element-wise operations on received input data using a secondary set of input data which is loaded into the NNA. Accordingly, there may be a secondary data input unit 1926 which is configured to load the secondary data input into the NNA which is provided to the element-wise operations processing unit 1906 via a secondary data receiver (Rx) 1930. By coupling the secondary data input unit 1926 to the crossbar 1920, the secondary data input unit 1926 can provide an alternate path to load the input data for a hardware pass into the NNA 1900.

In some cases, the NNA 1900 may include a memory interface (not shown) configured to provide an interface between the NNA 1900 and external memory (not shown). In these cases, the memory interface may be configured to receive from external memory the input data for the NNA and provide it to the input buffer 1924 and/or the secondary data input unit 1926.

For each hardware pass the NNA receives control information, which may also be referred to as command information or configuration information, identifying the components of the NNA which are active in that hardware pass, and the order in which the active components are to be used in the hardware pass. The control information may also specify any individual component configurations for the hardware pass. For example, as described in more detail below, the functions and/or operations that are implemented by one or more of the activation processing unit 1904, the element-wise operations processing unit 1906, the normalisation processing unit 1908 and the configurable pooling processing unit 1910 may be configurable on a per hardware pass basis. In these cases, the control information may include information identifying the function and/or operations that are to be implemented by one or more of those processing units in the hardware pass.

Each hardware pass the crossbar 1920 determines, from the control information for that hardware pass, whether it is active in the hardware pass. If the crossbar 1920 determines that it is active in the current hardware pass, the crossbar 1920 dynamically configures itself to form the pipeline of the plurality of pipelines identified by the control information for that hardware pass. In some cases, the crossbar 1920 may not be active in a hardware pass if, for example, there is only one hardware processing unit active in the hardware pass (e.g. the convolution processing unit 1902) and the result of the hardware pass is stored internally (e.g. within the NNA) or is passed to the output unit 1918 via an alternate (e.g. by-pass) path. For example, in some cases there may be an alternate or by-pass path (not shown) between the convolution processing unit 1902 and the output unit 1918 that allows the output of the convolution processing unit 1902 to be sent directly to the output unit 1918 (e.g. without passing through the crossbar 1920).

The crossbar 1920 comprises a plurality of input ports (shown in FIG. 19 by arrows pointing into the crossbar 1920), a plurality of output ports (shown in FIG. 19 by arrows pointing out from the crossbar 1920) and routing logic (e.g. multiplexors (not shown)) that allows the crossbar 1920 to selectively connect input ports of the crossbar 1920 to output ports of the crossbar 1920. In the example of FIG. 19, each input port of the crossbar 1920 may be coupled, or connected, to an output port of a hardware processing unit or a data input unit, and each output port of the crossbar 1920 may be coupled, or connected, to an input port of a hardware processing unit or a data input unit.

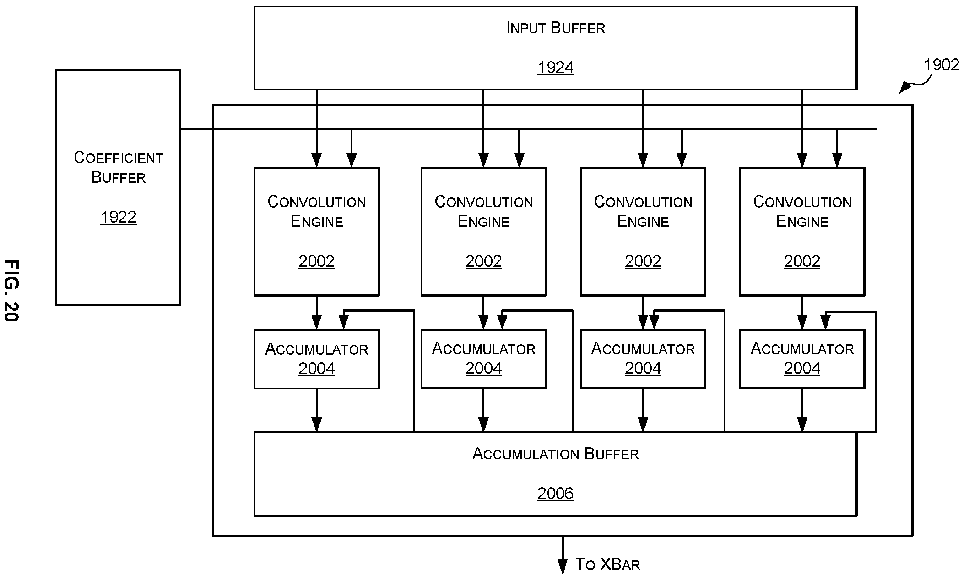

Each of the example hardware processing units of FIG. 19 will now be described. The convolution processing unit 1902 is hardware configured to receive an input tensor and a set of weights and perform convolution operations between the input tensor and the weights and output the results of the convolution operations. The convolution processing unit 1902 may have one or more convolution engines which are configured to perform a multiply-accumulate operation between a set of input data values (e.g. input tensels) and a set of weights. The weights to be used by the convolution processing unit 1902 in a hardware pass may be stored in a coefficient buffer 1922. In some cases, the input tensor to be processed by the convolution processing unit 1902 in a hardware pass may be stored in the input buffer 1924. An example implementation of a convolution processing unit 1902 is described below with respect to FIG. 20.

The activation processing unit 1904 is hardware configured to receive input data (e.g. an input tensor) and apply a non-linear function (which may also be referred to as an activation function) thereto. Example, non-linear functions which may be implemented (or approximated) by the activation processing unit 1904 include, but are not limited to, a Tanh function, a sigmoid function, a Rectified Linear Unit (ReLU) function or a leaky ReLU (LReLU) function. In a ReLU function, the output element $y_{i,j,k}$ is calculated by identifying a maximum value as set out in equation (2) wherein for $x$ values less than 0, $y = 0$. A LReLU function outputs the input if it is greater than zero, and outputs a fraction (e.g. 0.01x) of the input when it is negative. An example implementation of a LReLU function is set out in equation (3).

$$y_{i,j,k} = f\left(x_{i,j,k}\right) = max\{0, x_{i,j,k}\} \quad (2)$$

$$y_{i,j,k} = f\left(x_{i,j,k}\right) = max\{0.01 * x_{i,j,k}, x_{i,j,k}\} \quad (3)$$

In some cases, the activation function that is performed by the activation processing unit 1904 in a hardware pass may be configurable. For example, in some cases, the activation processing unit 1904 may receive information for a hardware pass that identifies one activation function of a plurality of activation functions that is to be applied to the input data in that hardware pass.

In some cases, the activation processing unit 1904 may be configured to store, in entries of a lookup table, data representing the activation function to be implemented in the hardware pass. In these cases, the activation processing unit 1904 may be configured to use the input data to lookup one or more entries in the lookup table and generate the output of activation function from the one or more entries in the lookup table and/or the input data. For example, the activation processing unit 1904 may be configured to calculate the output of the activation function by interpolating between two or more entries read from the lookup table. An example implementation of an activation processing unit 1904 is described in the Applicant's GB Patent No. 2552242, which is herein incorporated by reference in its entirety.

The element-wise operations processing unit 1906 is hardware configured to receive input data (e.g. an input tensor) and perform an element-wise operation on the input data (e.g. input tensor), optionally with another data set (e.g. another tensor) which may be obtained or retrieved from external memory via a secondary data input unit 1926. An element-wise operation is a same operation that is performed on each element of the input data/tensor (e.g. each input data value or each tensel). Element-wise operations which may be performed on the input data include, but are not limited to, add, multiply, maximum, and minimum.

The other data set/tensor may be the same size (e.g. have the same dimensions) as the input data/tensor such that corresponding elements of the two tensors are combined using an element-wise operation. Alternatively, the other data set/tensor and the input data/tensor may have a different size or dimensions. If, for example, the mismatching dimension of one of the tensors is of size 1, an element-wise operation may be performed between the input data/tensor and the other data set/tensor using a broadcast technique wherein the smaller tensor is broadcast (or expanded) to the size of the other tensor. For example, a tensor of size [N, H, W, C] = [1, 10, 1, 10] can be combined element-wise with a tensor of size [N, H, W, C] = [1, 10, 10, 10] by expanding the W dimension of the first tensor.

The normalisation processing unit 1908 is hardware configured to receive input data (e.g. an input tensor) and apply a normalisation function to the received input data to produce normalised data. Example normalisation functions which may be implemented by the normalisation processing unit 1908 include, but are not limited to, a Local Response Normalisation (LRN) function and a Local Contrast Normalisation (LCN) function. In some cases, the normalisation function which is applied to the input data may be configurable. For example, the normalisation processing unit 1908 may receive information for a hardware pass indicating which of a plurality of normalisation functions is to be applied to the input data in that hardware pass. This allows different normalisation functions to be applied in different hardware passes. An example implementation of a normalisation processing unit 1908 is described in the Applicant's GB Patent No. 2552242, which is herein incorporated by reference in its entirety.

The configurable pooling processing unit 1910, can be configured on a per hardware pass basis to perform a depth-wise convolution operation or one of one or more pooling operations on a received input tensor.

In some cases, the configurable pooling processing unit 1910 may be configured to receive the input data in a particular format which can be generated by the normalisation processing unit 1908. In such cases, as shown in FIG. 19, the input port of the configurable pooling processing unit 1910 may be coupled, or connected, to, the output port of the normalisation processing unit 1908 so as to only receive input data from the normalisation processing unit 1908. In these cases, to allow the input data for a hardware pass to be processed by the normalisation processing unit 1908 and not the configurable pooling processing unit 1910, the configurable pooling processing unit 1910 may comprise logic (e.g. a multiplexor (not shown)) which allows the configurable pooling processing unit 1910 to output either the data received from the normalisation processing unit 1908 or the data generated by the configurable pooling processing unit 1910. The configurable pooling processing unit 1910 may then receive information each hardware pass indicating whether the configurable pooling processing unit 1910 is active, and if so, identifying which output is to be provided to the crossbar 1920. However, it will be evident to a person of skill in the art that this is an example only, and that in other examples, the input port of the configurable pooling processing unit 1910 may be directly coupled, or connected, to the crossbar 1920 to allow the configurable pooling processing unit 1910 to receive input data from other units of the NNA 1900.

The interleave processing unit 1912 is hardware configured to receive input data (e.g. an input tensor) and perform a rearrangement operation to produce data that is in a particular order. The rearrangement may comprise sorting and/or transposing the received input data.

As shown in FIG. 19, the configurable pooling processing unit 1910 and the interleave processing unit 1912 may each have access to a shared buffer 1932 which can be used by these units to write data to and retrieve data from. For example, the configurable pooling processing unit 1910 may temporarily store received input tensels in the shared buffer 1932 until the received tensels have been processed by the configurable pooling processing unit 1910. The interleave processing unit 1912 may use the shared buffer 1932 to rearrange the order of received data or the generated data. For example, the interleave processing unit 1912 may be configured to write data to the shared buffer 1932 and then read the same data out in a different order. In some cases, each unit may be allotted a portion of the shared buffer 1932 which only that unit can access. In these cases, the configurable pooling processing unit 1910 and the interleave processing unit 1912 may only be able to read data out of the shared buffer 1932 that they have written to it.

The tensel rescale processing units 1914, 1916 are hardware configured to perform rescaling operations on the received input data. As is known to those of skill in the art, for hardware to process a set of values, each value is represented in a number format. Two common types of number formats are fixed point number formats and floating point number formats. As is known to those of skill in the art, a fixed point number format has a fixed number of digits after the radix point (e.g. decimal point or binary point). In contrast, a floating point number format does not have a fixed radix point (i.e. it can "float"). In other words, the radix point can be placed in multiple places within the representation. While representing the network parameters (e.g. input data values (i.e. input tensels), weights, biases) of a NN in a floating point number format may allow more accurate or precise output data to be produced, processing network parameters in a floating point number format in hardware is complex which tends to increase the silicon area, power consumption, memory and bandwidth consumption, and complexity of the hardware compared to hardware that processes network parameters in other formats, such as fixed point number formats. Accordingly, the NNA 1900 may be configured to represent and process the network parameters of a NN in a fixed point number format to reduce the area, power consumption, memory and bandwidth consumption, and complexity of the NNA.

The NNA 1900 may support one or more fixed point number formats for the network parameters (e.g. input data values (i.e. input tensels), weights, bias) and the fixed point format may be configurable on a layer basis or even a partial layer basis. For example, the NNA 1900 may support fixed point number formats defined by a fixed integer exponent $exp$ and a $b$-bit mantissa $m$ such that a value $u$ is equal to $u = 2^{exp}m$. In some cases, the mantissa $m$ may be represented in two's complement format. However, in other cases other signed or unsigned integer formats may be used. When such a fixed point number format is used, the exponent $exp$ and the number of mantissa bits $b$ only need to be stored once for a set of values represented in that number format. Different sets of network parameters may be represented using different mantissa bit lengths $m$ and/or different exponents $b$.

The NNA 1900 may alternatively or additionally support an affine fixed point number format, which is a fixed point number format which defines an offset and a scale. As described above, where the input data to a hardware processing unit (e.g. the configurable pooling processing unit 1910) is in an affine fixed point number format, it may be more hardware efficient for the hardware to perform the processing in a manner such that the output data does not accurately reflect the scale and/or offset. In general, it may be efficient to perform operations which may involve a change in scale in this manner. Examples of such operations include, but are not limited to, convolution operations, addition operations, and multiplication operations. In contrast, operations such as max pooling or average pooling may not be performed in this manner as the input and output scale are the same. Accordingly, the convolution processing unit 1902 which can perform convolution operations, the configurable pooling processing unit 1910 which can perform depth-wise convolution operations, and the element-wise operations processing unit 1906 which can perform addition and multiplication operations, may be configured to operate in this manner. Where a hardware processing unit is configured to operate in this manner, the output of the hardware processing unit may then be re-quantised to put it in the correct format.

This re-quantisation can be performed by the tensel rescale processing units 1914, 1916. There are many known methods and techniques for re-quantising data into an affine fixed point number format. The tensel rescale processing units 1914, 1916 may be configured to perform the re-quantising using any known method or technique. Since the output data of more than one active hardware processing unit may be re-quantised, having multiple tensel rescale processing units 1914, 1916 in the NNA 1900 allows more operations to be performed in a single hardware pass.

Re-quantisation may also be used when operations involve two or more tensors in different formats, for example, when concatenating multiple tensors together into a single tensor, to bring them all to the same format.

In some cases, each tensel rescale processing unit 1914, 1916 can perform the re-quantising on a per tensor basis or a per channel basis. As described above with respect to FIG. 2, the input data to a processing unit is typically a multi-dimensional block of data which is referred to as a tensor. Each plane of the tensor is referred to as a channel and each element of the tensor is referred to as a tensel. The tensel rescale processing units 1914, 1916 may be able to perform rescaling on a per-tensor basis (i.e. all of the input data values are quantised or re-quantised in the same manner) - or on a per-channel basis (i.e. each channel of the input data may be quantised or re-quantised in a different manner). In some cases, the control information for a hardware pass may specify, for any tensel rescale processing unit 1914, 1916 that is active in the hardware pass, whether that tensel rescale processing unit 1914, 1916 is to perform per-tensor or per-channel re-quantisation.

Whether or not a tensel rescale processing unit 1914, 1916 is configured to perform per-tensor or per-channel re-quantisation may depend on the format of the inputs to the processing unit that generated the data that is sent to the tensel rescale processing unit 1914, 1916. For example, if the convolution processing unit 1902 receives input data (e.g. an input tensor) quantised with [scale_input, offset_input] and it is desirable that the output data be quantised with [scale_output, offset_output], then depending on the format of the weights, the re-quantisation process may be per channel or per tensor. For example, if all of the weights are quantised with the same parameters [scale_weights, offset_weights] then the re-quantisation may be done on a per-tensor basis. If, however, at least two of the filters are quantised using different parameters - e.g. a first filter is quantised with parameters [scale_weights1, offset_weights1] and a second filter is quantised with parameters [scale_weights2, offset_weights2] - then because each channel of the output data (e.g. output tensor) is the result of the input data (input tensor) convolved with a filter, the re-quantisation may be done on a per-channel basis. Using different quantisation parameters for different filters may allow for better quantisation of the filters, as the filter parameters can be chosen at a finer granularity.

The NNA 1900 may also comprise an output unit 1918 which is configured to output the processed data. For example, the output unit 1918 may output the processed data to memory. In some cases, a hardware pass may be associated with an output data format and the output unit 1918 may be configured to convert the processed data into the output format associated with the hardware pass prior to outputting the processed data.

Reference is now made to FIG. 20 which illustrates an example implementation of the convolution processing unit 1902 of FIG. 19. In this example, the convolution processing unit 1902 comprises a plurality of convolution engines 2002, a plurality of accumulators 2004 and an accumulation buffer 2006.

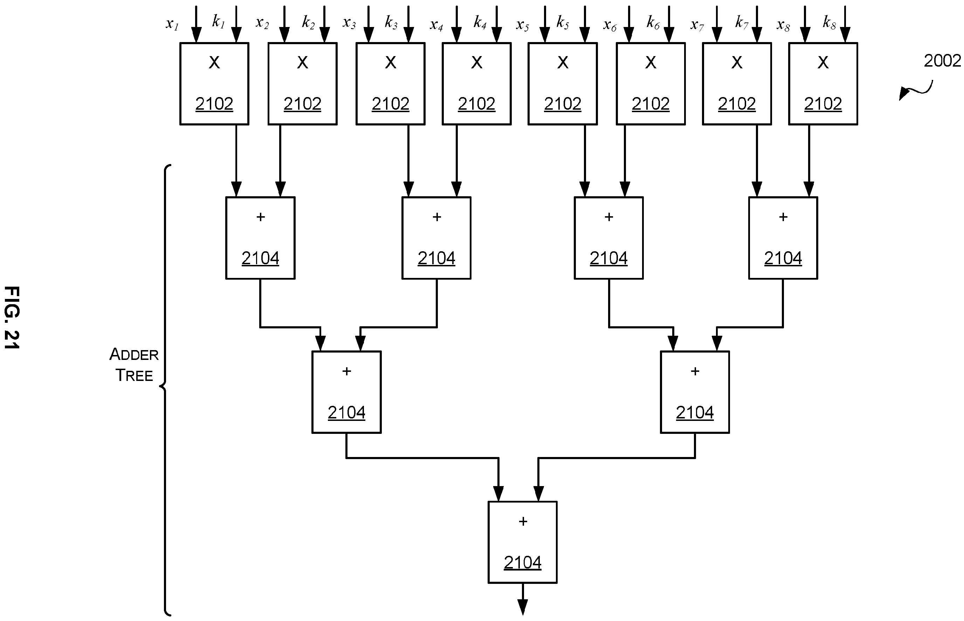

Each convolution engine 2002 comprises hardware logic configured to receive a set of weights $\{k_1, k_2 ..., k_8\}$ that represent all or a portion of a filter, and a set of input data values $\{x_1, x_2, ..., x_8\}$ that represent all or a portion of a window of the input data, and perform a multiply-accumulate calculation on the received weights and input data values. In some examples, as shown in FIG. 21, each convolution engine 2002 may comprise a plurality of multipliers 2102, each of which is configured to multiple a weight $(k_i)$ and a corresponding input data value $(x_i)$ to produce a multiplication output value. The multipliers 2102 are followed by a plurality of adders 2104. The adders may form an adder tree to calculate the sum of the multiplication outputs. In the example of FIG. 21 the convolution engine 2002 comprises eight multipliers 2102, but in other examples there may be more or fewer multipliers. For example, in some cases there may be 128 multipliers. Generally, if there are Z multipliers, the adder tree comprises Z-1 adders. The example convolution processing unit 1902 of FIG. 20 comprises four convolution engines 2002, however, it will be evident to a person of skill in the art that this is an example only and there may be only one convolution engine, there may be two convolution engines, or there may be more than two convolution engines.

Since it may take more than one hardware pass of the convolution engines 2002 to generate a complete filter result (e.g. because a convolution engine may only receive and process a portion of the weights of a filter and/or a portion of the input data values of a window in a cycle), the convolution processing unit 1902 may comprise a plurality of accumulators 2004. A pass of the convolution engines comprises receiving a set of weights and a set of input data values and performing a multiply-accumulate operation thereon. Each accumulator 2004 receives the output of one convolution engine 2002 and adds the output to previous convolution engine outputs that relate to the same filter. Since a convolution engine 2002 may not generate or produce outputs that relate to the same filter in consecutive cycles the partial results of one or more filters may be stored in an accumulation buffer 2006 and then the appropriate partial results may be provided to the accumulators 2004 each cycle by the accumulation buffer 2006.

As described above, in some cases the input buffer 1924 may be implemented as a plurality of banks of memory. In these cases, there may be a multiplexor (not shown) for each convolution engine that is coupled to each of bank of the input buffer to allow the data stored in any of the banks to be selectively directed to any of the convolution engines 2002.

**Test Results**

Reference is now made to FIG. 22 which shows a chart of the mean squared error at the output of an example neural network with and without performing activation channel equalisation on convolution layer outputs as described herein. The mean squared error at the output of the example neural network without performing activation channel equalisation is identified as "Original" in FIG. 22, the mean squared error at the output of the example neural network with performing activation channel equalising wherein the activation scaling factors were selected using 5 profiling images is identified as "Equalised (5 images)" in FIG. 22, and the mean squared error at the output of the example neural network with performing activation channel equalisation wherein the activation scaling factors were selected using 100 profiling images is identified as "Equalised (100 images)" in FIG. 22. It can be seen from FIG. 22 that performing the activation channel equalisation generally significantly reduced the error. Regarding channel 8, when using 5 profiling images not enough data was seen to capture the full range that the channel required. When using more data (from 100 profiling images) the full range required for the channel was seen, resolving the increased error.

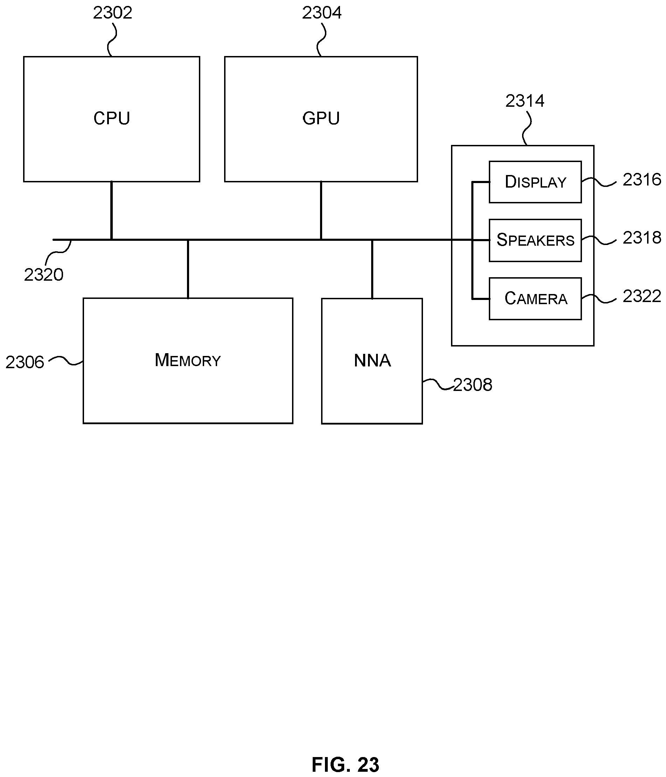

FIG. 23 shows an example computer system in which the neural network accelerators described herein may be implemented. The computer system comprises a CPU 2302, a GPU 2304, a memory 2306, a neural network accelerator (NNA) 2308 (which may be any of the neural network accelerators described herein, such as, but not limited to, the NNA 1900 of FIG. 19) and other devices 2314, such as a display 2316, speakers 2318 and a camera 2322. The components of the computer system can communicate with each other via a communications bus 2320.

The neural network accelerators, convolution processing units and convolution engines of FIGS. 19, 20 and 21 are shown as comprising a number of functional blocks. This is schematic only and is not intended to define a strict division between different logic elements of such entities. Each functional block may be provided in any suitable manner. It is to be understood that intermediate values described herein as being formed by a neural network accelerator, convolution processing unit or convolution engine need not be physically generated by the neural network accelerator, convolution processing unit or convolution engine at any point and may merely represent logical values which conveniently describe the processing performed by the neural network accelerator, convolution processing unit or convolution engine between its input and output.

The neural network accelerators, convolution processing units and convolution engines described herein may be embodied in hardware on an integrated circuit. The neural network accelerators described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e., run) in an integrated circuit manufacturing system configures the system to manufacture a neural network accelerator configured to perform any of the methods described herein, or to manufacture a neural network accelerator comprising any apparatus described herein. An integrated circuit definition dataset may be, for example, an integrated circuit description.

Therefore, there may be provided a method of manufacturing, at an integrated circuit manufacturing system, a neural network accelerator as described herein. Furthermore, there may be provided an integrated circuit definition dataset that, when processed in an integrated circuit manufacturing system, causes the method of manufacturing a neural network accelerator to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g., providing commands, variables etc.) may be required in order for a computer system configured for generating a manufacturing definition of an integrated circuit to execute code defining an integrated circuit so as to generate the manufacturing definition of that integrated circuit.

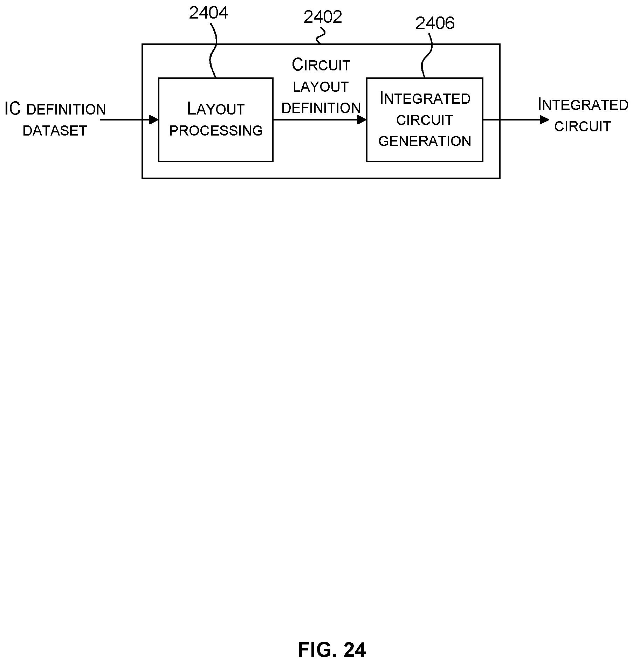

An example of processing an integrated circuit definition dataset at an integrated circuit manufacturing system so as to configure the system to manufacture a neural network accelerator will now be described with respect to FIG. 24.

FIG. 24 shows an example of an integrated circuit (IC) manufacturing system 2402 which is configured to manufacture a neural network accelerator as described in any of the examples herein. In particular, the IC manufacturing system 2402 comprises a layout processing system 2404 and an integrated circuit generation system 2406. The IC manufacturing system 2402 is configured to receive an IC definition dataset (e.g., defining a neural network accelerator as described in any of the examples herein), process the IC definition dataset, and generate an IC according to the IC definition dataset (e.g., which embodies a neural network accelerator as described in any of the examples herein). The processing of the IC definition dataset configures the IC manufacturing system 2402 to manufacture an integrated circuit embodying a neural network accelerator as described in any of the examples herein.

The layout processing system 2404 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g., in terms of logical components (e.g., NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 2404 has determined the circuit layout it may output a circuit layout definition to the IC generation system 2406. A circuit layout definition may be, for example, a circuit layout description.

The IC generation system 2406 generates an IC according to the circuit layout definition, as is known in the art. For example, the IC generation system 2406 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 2406 may be in the form of computer-readable code which the IC generation system 2406 can use to form a suitable mask for use in generating an IC.

The different processes performed by the IC manufacturing system 2402 may be implemented all in one location, e.g., by one party. Alternatively, the IC manufacturing system 2402 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a neural network accelerator without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g., by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 24 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 24, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g., in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method (1800) of processing data in accordance with a neural network, the neural network comprising a sequence of layers comprising a first convolution layer, a second convolution layer, and none, one or more than one middle layer between the first and second convolution layers, the method (1800) comprising:

    scaling, using hardware logic, a tensor in the neural network, after the first convolution layer and before the second convolution layer, on a per channel basis by a set of per channel activation scaling factors (1802); and
    implementing, using the hardware logic, the second convolution layer with weights that have been scaled on a per input channel basis by the inverses of the set of per channel activation scaling factors (1804).

2. The method (1800) of claim 1, wherein the tensor that is scaled on a per channel basis by the set of per channel activation scaling factors is an output tensor of the first convolution layer.

3. The method (1800) of claim 2, wherein the sequence comprises a middle layer and an output tensor of the middle layer feeds a first branch comprising the second convolution layer and a second branch, and the method further comprises scaling, using the hardware logic, a tensor in the second branch on a per channel basis by the inverses of the set of per channel activation scaling factors.

4. The method (1800) of claim 2, wherein an output tensor of the first convolution layer feeds a first branch comprising the second convolution layer and a second branch, and the method further comprises scaling, using the hardware logic, a tensor in the second branch on a per channel basis by the inverses of the set of per channel activation scaling factors.

5. The method (1800) of claim 1, wherein the sequence comprises a middle layer and the tensor that is scaled on a per channel basis by the set of per channel activation scaling factors is an output tensor of the middle layer.

6. The method (1800) of claim 1, wherein the first convolution layer forms part of a first branch and an output tensor of the first branch is combined with a tensor of a second branch to generate an input tensor to the second convolution layer, and the method further comprises scaling the tensor of the second branch on a per channel basis by the set of per channel activation scaling factors.

7. The method (1800) of claim 6, wherein the hardware logic comprises a neural network accelerator that includes a hardware unit configured to receive a first tensor and a second tensor, rescale the second tensor, and perform a per tensel operation between the first tensor and the rescaled second tensor, and (i) the combining of the output tensor of the first branch and the tensor of the second branch, and (ii) the scaling of the tensor in the second branch on a per channel basis by the set of per channel activation scaling factors are performed by the hardware unit.

8. The method (1800) of claim 1, wherein the first convolution layer forms part of a first branch and an output tensor of the first branch is combined with a tensor of a second branch to generate an input tensor to the second convolution layer, and the tensor that is scaled on a per channel basis by the set of per channel activation scaling factors is the input tensor to the second convolution layer.

9. The method (1800) of claim 8, wherein the combination and the scaling by the set of per channel activation scaling factors are performed by a single hardware unit of the hardware logic.

10. The method (1800) of claim 9, wherein the hardware logic comprises a neural network accelerator that includes a hardware unit configured to perform a per tensel operation between a first tensor and a second tensor and rescale an output of the per tensel operation, and (i) the combining of the output tensor of the first branch and the tensor of the second branch, and (ii) the scaling of the input tensor to the second convolution layer on a per channel basis by the set of per channel activation scaling factors are performed by the hardware unit.

11. The method (1800) of any of claims 5 to 10, wherein the sequence comprises a middle layer that is non-scale invariant.

12. The method (1800) of any preceding claim, wherein the method further comprises:

implementing the first convolution layer with weights that have been scaled on a per output channel basis by a set of per channel weight scaling factors (1806); and scaling an output tensor of the first convolution layer on a per channel basis by the inverses of the set of per channel weight scaling factors (1808).

13. The method (1800) of any preceding claim, wherein the neural network comprises a second sequence of layers comprising a third convolution layer, a fourth convolution layer, and none, one or more than one middle layer between the third and fourth convolution layers, and the method further comprises:

scaling a tensor in the neural network, after the third convolution layer and before the fourth convolution layer, on a per channel basis by a second set of per channel activation scaling factors (1802); and implementing the fourth convolution layer with weights that have been scaled on a per input channel basis by the inverses of the second set of per channel activation scaling factors (1804).

14. The method (1800) of any preceding claim, wherein the hardware logic comprises a neural network accelerator, the neural network accelerator comprises a hardware unit configured to perform per channel multiplication and the scaling of the tensor by the set of per channel activation scaling factors is performed by the hardware unit.

15. A computer readable storage medium having stored thereon computer readable code configured to cause a neural network accelerator to perform the method of any preceding claim when the code is run.

**FIG. 1**

FIG. 2

**FIG. 3**

EP 4 345 691 A1

**FIG. 4**

INPUT DATA VALUES (A0) →

402

CONVOLUTION LAYER

→

404

ACTIVATION LAYER (ReLU)

→ INPUT DATA VALUES (A1) →

406

CONVOLUTION LAYER

→ OUTPUT DATA VALUES (A2)

WEIGHTS (W0)

WEIGHTS (W1)

OUTPUT CHANNEL (A1)

$$\begin{bmatrix} \vdots & \vdots & \vdots & \vdots \\ s_i w_{i1}^{W0} & s_i w_{i2}^{W0} & s_i w_{i3}^{W0} & s_i w_{i4}^{W0} \\ \vdots & \vdots & \vdots & \vdots \\ \vdots & \vdots & \vdots & \vdots \end{bmatrix}$$

INPUT CHANNEL (A0)

OUTPUT CHANNEL (A2)

$$\begin{bmatrix} \cdots & w_{1j}^{W1}/s_i & \cdots & \cdots \\ \cdots & w_{2j}^{W1}/s_i & \cdots & \cdots \\ \cdots & w_{3j}^{W1}/s_i & \cdots & \cdots \\ \cdots & w_{4j}^{W1}/s_i & \cdots & \cdots \end{bmatrix}$$

INPUT CHANNEL (A1)

INPUT DATA VALUES (A0) → **502** CONVOLUTION LAYER → **508** CHANNEL-WISE MULTIPLICATION → **504** ACTIVATION LAYER (ReLU) → INPUT DATA VALUES (A1) → **506** CONVOLUTION LAYER → OUTPUT DATA VALUES (A2)

WEIGHTS (W0)

SCALING FACTORS

WEIGHTS (W1)

OUTPUT CHANNEL (A1)

$$\begin{bmatrix} \vdots \\ s_i^{A1} \\ \vdots \\ \vdots \end{bmatrix}$$

OUTPUT CHANNEL (A2)

$$\begin{bmatrix} \cdots & w_{1j}^{W1}/s_i^{A1} & \cdots & \cdots \\ \cdots & w_{2j}^{W1}/s_i^{A1} & \cdots & \cdots \\ \cdots & w_{3j}^{W1}/s_i^{A1} & \cdots & \cdots \\ \cdots & w_{4j}^{W1}/s_i^{A1} & \cdots & \cdots \end{bmatrix}$$

INPUT CHANNEL (A1)

**FIG. 5**

EP 4 345 691 A1

**FIG. 6**

INPUT DATA VALUES (A0) → | CONVOLUTION LAYER | 602

↑ WEIGHTS (W0)

→ | ACTIVATION LAYER (SWISH) | 604

→ | CHANNEL-WISE MULTIPLICATION | 608

↑ SCALING FACTORS

→ INPUT DATA VALUES (A1) → | CONVOLUTION LAYER | 606 → OUTPUT DATA VALUES (A2) →

↑ WEIGHTS (W1)

OUTPUT CHANNEL (A1)

$$\begin{bmatrix} \vdots \\ s_i^{A1} \\ \vdots \end{bmatrix}$$

OUTPUT CHANNEL (A2)

$$\begin{bmatrix} \cdots & w_{1j}^{W1}/s_i^{A1} & \cdots & \cdots \\ \cdots & w_{2j}^{W1}/s_i^{A1} & \cdots & \cdots \\ \cdots & w_{3j}^{W1}/s_i^{A1} & \cdots & \cdots \\ \cdots & w_{4j}^{W1}/s_i^{A1} & \cdots & \cdots \end{bmatrix}$$

INPUT CHANNEL (A1)

FIG. 7

INPUT DATA VALUES (A0) →

702 CONVOLUTION LAYER

WEIGHTS (W0)

708 CHANNEL-WISE MULTIPLICATION

SCALING FACTORS

704 ACTIVATION LAYER (ReLU)

INPUT DATA VALUES (A1) →

706 CONVOLUTION LAYER

WEIGHTS (W1)

OUTPUT DATA VALUES (A2)

OUTPUT CHANNEL (A1)

$$\begin{bmatrix} \vdots & \vdots & \vdots & \vdots \\ s_i^{W0} w_{i1}^{W0} & s_i^{W0} w_{i2}^{W0} & s_i^{W0} w_{i3}^{W0} & s_i^{W0} w_{i4}^{W0} \\ \vdots & \vdots & \vdots & \vdots \\ \vdots & \vdots & \vdots & \vdots \end{bmatrix}$$

INPUT CHANNEL (A0)

OUTPUT CHANNEL (A1)

$$\begin{bmatrix} \vdots \\ s_i^{A1}/s_i^{W0} \\ \vdots \end{bmatrix}$$

OUTPUT CHANNEL (A2)

$$\begin{bmatrix} \cdots & w_{1j}^{W1}/s_i^{A1} & \cdots & \cdots \\ \cdots & w_{2j}^{W1}/s_i^{A1} & \cdots & \cdots \\ \cdots & w_{3j}^{W1}/s_i^{A1} & \cdots & \cdots \\ \cdots & w_{4j}^{W1}/s_i^{A1} & \cdots & \cdots \end{bmatrix}$$

INPUT CHANNEL (A1)

EP 4 345 691 A1

**FIG. 8**

INPUT DATA VALUES (A0) →

**802** CONVOLUTION LAYER
↑ WEIGHTS (W0)

**810** CHANNEL-WISE MULTIPLICATION
↑ WEIGHT SCALING FACTORS

**804** ACTIVATION LAYER (SWISH)

**808** CHANNEL-WISE MULTIPLICATION
↑ ACTIVATION SCALING FACTORS

INPUT DATA VALUES (A1)

**806** CONVOLUTION LAYER → OUTPUT DATA VALUES (A2)
↑ WEIGHTS (W1)

OUTPUT CHANNEL (A1)
$$\begin{bmatrix} \vdots & \vdots & \vdots & \vdots \\ s_i^{W0}w_{i1}^{W0} & s_i^{W0}w_{i2}^{W0} & s_i^{W0}w_{i3}^{W0} & s_i^{W0}w_{i4}^{W0} \\ \vdots & \vdots & \vdots & \vdots \\ \vdots & \vdots & \vdots & \vdots \end{bmatrix}$$
INPUT CHANNEL (A0)

OUTPUT CHANNEL (A1)
$$\begin{bmatrix} \vdots \\ 1/s_i^{W0} \\ \vdots \end{bmatrix}$$

OUTPUT CHANNEL (A1)
$$\begin{bmatrix} \vdots \\ s_i^{A1} \\ \vdots \end{bmatrix}$$

OUTPUT CHANNEL (A2)
$$\begin{bmatrix} \cdots & w_{1j}^{W1}/s_i^{A1} & \cdots \\ \cdots & w_{2j}^{W1}/s_i^{A1} & \cdots \\ \cdots & w_{3j}^{W1}/s_i^{A1} & \cdots \\ \cdots & w_{4j}^{W1}/s_i^{A1} & \cdots \end{bmatrix}$$
INPUT CHANNEL (A1)

908

OUTPUT DATA VALUES (A2)

906

CONVOLUTION LAYER

INPUT DATA VALUES (A1)

WEIGHTS (W1)

904

ACTIVATION LAYER (RELU)

902

CONVOLUTION LAYER

INPUT DATA VALUES (A0)

WEIGHTS (W0)

INPUT DATA VALUES (A1)

910

**FIG. 9**

FIG. 10

FIG. 11

EP 4 345 691 A1

FIG. 12

FIG. 13

FIG. 14

FIG. 15

FIG. 16

INPUT DATA
VALUES
(A0)

1202
CONVOLUTION
LAYER

1208

1204
ACTIVATION
LAYER
(ReLU)

WEIGHTS
(W0)

1500

1602

1210

CHANNEL-WISE
MULTIPLICATION

INPUT DATA
VALUES
(A1)

1206
CONVOLUTION
LAYER

OUTPUT DATA
VALUES
(A2)

SCALING
FACTORS

WEIGHTS
(W1)

1212

OUTPUT
CHANNEL
(A1)

$$\begin{bmatrix} \vdots \\ s_i^{A1} \\ \vdots \end{bmatrix}$$

OUTPUT
CHANNEL
(A2)

$$\begin{bmatrix} \cdots & w_{1j}^{W1}/s_i^{A1} & \cdots & \cdots \\ \cdots & w_{2j}^{W1}/s_i^{A1} & \cdots & \cdots \\ \cdots & w_{3j}^{W1}/s_i^{A1} & \cdots & \cdots \\ \cdots & w_{4j}^{W1}/s_i^{A1} & \cdots & \cdots \end{bmatrix}$$

INPUT
CHANNEL
(A1)

EP 4 345 691 A1

39

FIG. 17

**FIG. 18**

FIG. 19

FIG. 20

EP 4 345 691 A1

**FIG. 21**

Adder Tree

2002

**FIG. 22**

**FIG. 23**

2404     2402     2406

IC DEFINITION DATASET → | LAYOUT PROCESSING | CIRCUIT LAYOUT DEFINITION | INTEGRATED CIRCUIT GENERATION | → INTEGRATED CIRCUIT

**FIG. 24**

Europäisches Patentamt
European Patent Office
Office européen des brevets

# EUROPEAN SEARCH REPORT

**Application Number**

EP 23 20 0841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/302299 A1 (NAGEL MARKUS [NL] ET AL) 24 September 2020 (2020-09-24) <br> * paragraph [0037] - paragraph [0069] * <br> * paragraph [0078] * <br> * abstract; figures 2, 3, 4A,B * <br> ----- | 1-15 | INV. <br> G06N3/0464 <br> G06N3/063 <br> G06N3/0495 |
| A | ELDAD MELLER ET AL: "Same, Same But Different - Recovering Neural Network Quantization Error Through Weight Factorization", <br> ARXIV.ORG, CORNELL UNIVERSITY LIBRARY, 201 OLIN LIBRARY CORNELL UNIVERSITY ITHACA, NY 14853, <br> 5 February 2019 (2019-02-05), XP081025758, <br> * abstract; figures 1, 2 * <br> * page 2, column 2, line 1 - page 6, column 1, line 24 * <br> ----- | 1-15 | |
| A | JIANG WEIXIONG ET AL: "A High-Throughput Full-Dataflow MobileNetv2 Accelerator on Edge FPGA", <br> IEEE TRANSACTIONS ON COMPUTER-AIDED DESIGN OF INTEGRATED CIRCUITS AND SYSTEMS, IEEE, USA, <br> vol. 42, no. 5, <br> 13 August 2022 (2022-08-13), pages 1532-1545, XP011939107, <br> ISSN: 0278-0070, DOI: 10.1109/TCAD.2022.3198246 <br> [retrieved on 2022-08-16] <br> * abstract; figures 1-4 * <br> * page 1534, column 2, line 11 - page 1539, column 2, line 21 * <br> ----- | 1-15 | TECHNICAL FIELDS SEARCHED (IPC) <br><br> G06N |

The present search report has been drawn up for all claims

| Place of search | Date of completion of the search | Examiner |
|---|---|---|
| The Hague | 19 February 2024 | Rousset, Antoine |

EPO FORM 1503 03.82 (P04C01)

## ANNEX TO THE EUROPEAN SEARCH REPORT
## ON EUROPEAN PATENT APPLICATION NO.

EP 23 20 0841

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2024

| Patent document cited in search report | Publication date | Patent family member(s) | Publication date |
|---|---|---|---|
| US 2020302299 A1 | 24-09-2020 | NONE | |

For more details about this annex : see Official Journal of the European Patent Office, No. 12/82

**REFERENCES CITED IN THE DESCRIPTION**

**Patent documents cited in the description**

- GB 1718293 A
- GB 1821150 A
- GB 1718289 A
- GB 2552242 A